# EUROPÄISCHE PATENTSCHRIFT

(11) **EP 1 181 173 B1**
(45) Veröffentlichungstag und Bekanntmachung des Hinweises auf die Patenterteilung: **22.10.2003**
(21) Anmeldenummer: 00945630.2
(22) Anmeldetag: 08.06.2000
(51) Int. Cl.: B60R 21/20

(54) **AIRBAGMODUL FÜR LENKRÄDER**
AIRBAG MODULE FOR STEERING WHEELS
MODULE D'AIRBAG POUR VOLANTS

(30) Priorität: 08.06.1999 DE 19927024
(43) Veröffentlichungstag der Anmeldung: 27.02.2002
(73) Patentinhaber: Takata-Petri AG, 63743 Aschaffenburg (DE)
(72) Erfinder: ADOMEIT, Heinz-Dieter, D-10623 Berlin (DE); DETTMER, Alexander, D-12353 Berlin (DE); MAROTZKE, Thomas, D-16562 Bergfelde (DE); OSE, Falk, D-13189 Berlin (DE); WINKLER, Andreas, D-12203 Berlin (DE)
(74) Vertreter: Müller, Wolfram Hubertus, Dr. Dipl.-Phys.
(86) Internationale Anmeldenummer: DE0001890
(87) Internationale Veröffentlichungsnummer: WO00074981

(56) Entgegenhaltungen:
- EP-A- 0 844 143
- EP-A- 0 872 401
- DE-A- 19 742 506
- US-A- 5 174 599
- "AIR BAG WITH IMPROVED OCCUPANT PERFORMANCE" RESEARCH DISCLOSURE,GB,INDUSTRIAL OPPORTUNITIES LTD. HAVANT, Nr. 392, 1. Dezember 1996 (1996-12-01), Seite 805 XP000682096 ISSN: 0374-4353

## Beschreibung

Die Erfindung betrifft ein Airbagmodul für Lenkräder nach dem Oberbegriff des Anspruchs 1.

Airbagmodule für Lenkräder sind mittels Abdeckungen der unterschiedlichsten Ausführungen vom Fahrgastinnenraum abgetrennt. So ist aus der DE 197 35 438 A1 eine Abdeckung bekannt, die einseitig angelenkt ist und durch den sich entfaltenden Gassack an drei Seiten aufgerissen und um ein Scharnier aufgeklappt wird. Dabei wird im wesentlichen der gesamte durch ein Airbaggehäuse umgrenzte Raum in Richtung des Insassen freigelegt, so daß sich der Gassack in Richtung des Insassen frei entfalten kann.

Aus der EP 0 884 359 A1 ist eine Abdeckung bekannt, die zweiseitg angelenkt ist und bei der in der Mitte eine Aufreißnaht vorgesehen ist. Durch den sich entfaltenden Gassack wird ein Teil der Abdeckung in Richtung der Windschutzscheibe um ein Scharnier aufgeklappt, während das zweite Teil um ein Scharnier in die entgegengesetzte Richtung aufgeklappt wird. Auch bei dieser Abdeckung wird im wesentlichen der gesamte durch ein Airbaggehäuse umgrenzte Raum in Richtung des Insassen freigelegt.

Aus der WO 98/36 948 ist eine vierseitig zu öffnende Gassackabdeckung bekannt. Diese Abdeckung weist außer in Richtung der Windschutzscheibe und in die entgegengesetzte Richtung zu öffnende Teile auch je ein nach links bzw. rechts zu öffnendes Teil auf. Dabei wird wie bei den vorher genannten Abdeckungen der gesamte durch das Airbaggehäuse umgrenzte Raum freigelegt.

Der Nachteil dieser Abdeckungen besteht darin, daß ein unmittelbar vor dem Lenkrad befindlicher Insasse (sogenannte out-of-poaition-(oop)-Lage) nach Aktivierung des Airbags stark belastet wird. Bei direkter Anlage des Insassen am Lenkrad wird die Belastung durch die sich nach Zündung des Gasgenerators bildende erste Gassackblase und das Aufklappen der Teile der Gassackabdeckung hervorgerufen. Besonders nachteilig wirken sich dabei große Klappenteile aus, wie sie z.B. bei Abdeckungen vorzufinden sind, bei denen designbedingt großformatige Firmenlogos aus Metall eingebunden sind. Befindet sich der Insasse in einer etwas entfernteren Position, besteht die Gefahr, daß er vom bereits teilentfalteten Gassack angeschossen wird.

Die EP 0 872 401 A2 beschreibt eine Lenksäule für Insassenschutzeinrichtungen, bei der die Abdeckung eines Airbags als ein in Längsrichtung verschiebbarer Winkel ausgeführt ist. Bei einer zündung des Gasgenerators wird der dem Insassen zugewandte Teil der Abdeckung vollständig aus seiner Ruheposition in Richtung des Insassen verschoben, ohne dabei aus der Kontur des Lenkrades herauszuragen. Die in der EP 0 872 401 A2 beschriebene Lenksäule ermöglicht eine Verminderung des Verletzungsrisikos eines dicht vor dem Lenkrad befindlichen Fahrers nur bei Lenkrädern, die eine tiefe Schüsselung aufweisen, das heißt bei denen ein relativ großer Abstand zwischen der Airbag-Abdeckung und dem Lenkradkranz vorliegt.

Das gattungsbildende Dokument "Airbag with the Improved Occupant Performance", Research Disclosure, GB, Induatrial Opportunities LTD., Havant, No. 392, 01. Dezember 1996, Seite 805, XP000682096 offenbart ein Lenkrad mit einem Airbagmodul, dessen Abdeckung als einteilige, schwenkbare Klappe ausgeführt ist. Dabei kommt es im Verlauf einer Entfaltung des Gassackes des Airbagmoduls zu einem vollständigen Aufklappen bzw. Öffnen der Abdeckung. Nachteilig an dieser Ausführung eines Airbagmoduls ist, daß die Gefahr besteht, daß ein Insasse zum einen durch die in Richtung des Fahrers geschwenkte Klappe und zum anderen durch den sich entfaltenden Gaesack verletzt wird.

Aus der EP 0 844 143 A1 ist ein Lenkrad mit einem Gehäuse für die Aufnahme eines Gassackes bekannt, bei dem eine Hauptklappe vorgesehen ist, die die Hauptöffnung abdeckt. Weiterhin sind dazu in etwa senkrecht angeordnete Nebenklappen vorgesehen, die bezogen auf die Hauptentfaltungsrichtung nach unten weisende Öffnungen abdecken. Bei dieser Abdeckung entfaltet sich der Gassack in der ersten Entfaltungsphase nicht in Richtung der Hauptentfaltungarichtung, sondern bedingt durch die Leitfunktion der Hauptklappe weiter nach unten in Richtung der Brust des Fahrers. Dadurch wird die Verletzungsgefahr für einen oop-Insassen verringert. Es besteht aber weiterhin die Möglichkeit, daß der Insasse durch das Umschlagen der Hauptklappe und in einer späteren Entfaltungsphase durch den auftreffenden Gassack stark belastet wird. Auch wird, wie bei den vorher beschriebenen Abdeckungen, bei dieser Abdeckung der durch das Airbaggehäuee umgrenzte Raum nahezu vollständig freigelegt, so daß bei einer Sekundärkollision die Energie eines auf das Lenkrad aufprallenden Insassen nur ungenügend abgebaut werden kann.

Der Erfindung liegt deshalb die Aufgabe zugrunde, bei einem Airbagmodul für das Lenkrad sowohl den Schutz des Insassen bei oop-Lage als auch für den Fall einer Sekundärkollision zu verbessern.

Erfindungsgemäß wird dies durch ein Airbagmodul mit den Merkmalen des Anspruchs 1 erreicht.

Bei einem Airbagmodul für Lenkräder, wobei das Airbagmodul zum Insassen hin mit einer Abdeckung versehen ist, ist diese erfindungsgemäß lediglich in einem bei Geradeausstellung des Lenkrades unten liegenden Bereich vollständig zu öffnen, der überwiegend unterhalb einer Linie liegt, die quer zur Fahrtrichtung verläuft und die Lenksäulenmittelachse schneidet.

Es hat sich gezeigt, daß sich der Gassack, der sich in der Anfangsphase nach Zündung des Gasgenerators nach unten ausbreitet, anschließend wie üblich so entfaltet, daß das gesamte Lenkrad bedeckt ist.

Durch das Entfalten des Gassacks in Richtung des unteren Abschnitts des Lenkradkranzes wird für einen Insassen in oop-Lage die Belastung verringert, insbesondere da der Kopf- und Halsbereich des Insassen vom sich entfaltenden Gassack nicht erfaßt wird und den Insassen darüberhinaus keine umschlagenden Klappensegmente gefährden. Weiterhin wird aber auch bei einer Sekundärkollision die Belastung verringert, da der mittlere und obere Bereich der Abdeckung zumindest nahezu in der Lage verbleiben, die sie vor Entfaltung des Gassackes hatten, so daß eine energieabsorbierende Ausführung der Abdeckung nach dem Zusammenfallen des Gassacks ihre Wirksamkeit beibehält.

Ein weiterer Vorteil besteht darin, daß der mittlere und obere Bereich der Abdeckung keinen oop-bedingten Einschränkungen beim Design hinsichtlich der Größe des Firmenlogos unterliegen. Weiterhin ist es möglich, im mittleren und oberen Bereich der Abdeckung Betätigungselemente, wie Hupenschalter oder andere Schalter unterzubringen. Das war bisher nicht möglich, da alle Teile der Abdeckung durch den sich entfaltenden Gassack geöffnet wurden.

In einer Ausführungsform schließen sich an den unteren zu öffnenden Bereich ein mittlerer Bereich und ein oberer Bereich der Abdeckung an.

Bevorzugt weisen der an den unteren zu öffnenden Bereich anschließende mittlere Bereich und der obere Bereich der Abdeckung das Aufreißen dieser Bereiche verhindernde Versteifungselemente auf. Zur Vermeidung des Aufreißens durch den sich entfaltenden Gassack kann alternativ oder zusätzlich vorgesehen sein, daß der mittlere und obere Bereich der Abdeckung fest mit einer darunter befindlichen Gasleiteinrichtung oder einem dort angeordneten Gasgenerator verbunden sind. In einer weiteren Ausgestaltung dieser Ausführungsform ist vorgesehen, daß mindestens der mittlere und obere Bereich der Abdeckung zusammen mit dem Lenkrad aus einem Stück bestehen. Dieser Teil der Abdeckung ist dann also Teil des Lenkradskeletts.

In einer weiteren Ausführungsform ist vorgesehen, daß der mittlere und obere Bereich der Abdeckung über Deformationselemente mit einem unter der Abdeckung liegenden festen Bauteil des Airbagmoduls verbunden sind, daß diese Bereiche der Abdeckung um einen vorbestimmten geringen Betrag zu öffnen sind, wobei die Deformationselemente so ausgebildet sind, daß sie Begrenzungen für das vorbestimmte geringe Öffnen und in dieser geöffneten Stellung Energieabsorptionselemente für den Fall eines Sekundäraufpralls eines Insassen auf die Abdeckung darstellen. Die durch das Schwenken des mittleren und oberen Bereiches erzeugte Öffnung ist dabei dem unteren Bereich der Abdeckung zugewandt.

Auch bei dieser Ausführungsform bleibt die Schutzwirkung der Abdeckung trotz der geringfügigen Öffnung des mittleren und oberen Bereichs der Abdeckung im Falle eines Sekundäraufpralls erhalten und wird zusätzlich durch die Deformationselemente unterstützt.

Der mittlere und obere Bereich der Abdeckung sind vorzugsweise so ausgebildet, daß sie eine darunter liegende Gasleiteinrichtung und/oder einen darunterliegenden Gasgenerator zumindest annähernd vollständig abdecken.

Zur Verbesserung der Schutzwirkung im Falle eines Sekundäraufpralls sind der mittlere und obere Bereich der Abdeckung energieabsorbierend ausgeführt. Zusätzlich oder alternativ kann der Raum zwischen der Abdeckung und der Gasleiteinrichtung bzw. dem Gasgenerator mit Schaum ausgefüllt sein.

Weiterhin kann der Raum zwischen der Abdeckung und der Gasleiteinrichtung bzw. dem Gasgenerator durch mindestens ein Deformationselement überbrückt sein. Das Deformationselement ist vorzugsweise rippenförmig und am oberen oder mittleren Bereich der Abdeckung angespritzt.

In einer weiteren Ausführungsform ist in dem bei Geradeausstellung des Lenkrades oben liegenden Bereich des Airbagmoduls ein Platzhalter vorgesehen, der auch als Deformationselement ausgebildet sein kann. Dadurch ist in diesem oberen Bereich des Airbagmoduls ein Abschnitt vorhanden, der frei von Gassackgewebe ist.

Vorzugsweise ist eine Gasleiteinrichtung angeordnet, die vorwiegend Öffnungen in Richtung des sich vollständig öffnenden unteren Bereichs der Abdeckung aufweist. Diese Gasleiteinrichtung kann zusätzlich als Deformationselement ausgebildet sein. Die Gasleiteinrichtung sollte zweckmäßig integraler Bestandteil des Gasgenerators oder des Lenkradskelettes sein, um eine kostengünstige Fertigung zu erreichen.

Ein Gassack des Airbagmoduls ist zweckmäßig so gefaltet, daß das gefaltete Gassackpaket neben der Gasleiteinrichtung bzw. dem Gasgenerator liegt. Dabei kann das Gassackpaket diese vollständig oder U-förmig so umgeben, so daß der bei Geradeausfahrt oben liegende Bereich des Airbagmoduls frei von Gassackgewebe gehalten ist oder daß die beiden Schenkel des U-förmigen Gassackpaketes sich im bei Geradeausfahrt oben liegenden Bereich des Airbagmoduls berühren. Dadurch wird eine für den oop-Fall günstige Entfaltung des Gassacks unterstützt.

In einer weiteren Ausgestaltung sind Mittel für die zumindestens zeitweise Fixierung des Gassacks während der Entfaltung über der Gasleiteinrichtung/ dem Gasgenerator vorgesehen.

In einer weiteren Ausführungsform ist der Gassack im Bereich der in Richtung des unteren Bereichs der Abdeckung orientierten Gasaustrittsöffnung der Gasleiteinrichtung angebunden. Bei dieser Ausführungsform befindet sich also keine Gassacklage zwischen der Gasleiteinrichtung und den darüber angeordneten Bereichen der Abdeckung.

In einer anderen Ausführungsform liegt über der Gasleiteinrichtung bzw. über dem Gasgenerator nur eine Gassacklage. Dadurch wird wie bei der vorgenannten Ausführungsform eine für die oop-Lage günstige Entfaltung des Gassacks unterstützt.

Ein Einblasmund des Gassacks des Airbagmoduls sollte bezüglich der Außenkontur des Gassacks mittig oder in der bei Geradeausstellung des Lenkrades vorgesehenen Einbaulage nach unten versetzt angeordnet sein.

In einer weiteren Ausgestaltung ist vorgesehen, daß im mittleren und oberen Bereich der Abdeckung Funktionselemente angeordnet sind, z.B. ein Hupenkontakt oder Elemente zur Betätigung des Autoradios. Die Anordnung dieser Elemente ist durch die erfindungsgemäße Ausbildung der Abdeckung erstmalig seit Einführung der Fahrerairbags möglich. An den bisher vollständig aufreißenden Abdeckungsteilen konnten derartige Elemente nicht angebracht werden.

Eine weitere Ausführungsform sieht vor, daß die Abdeckung des Gassacks eine Seitenwand aufweist, die im Bereich von Aufreißlinien des unten liegenden Bereichs der Abdeckung unterbrochen ist, um bei Entfalten des Gassacks ein sich Öffnen des unten liegenden Bereichs der Abdeckung zu ermöglichen. Der unten liegende Bereich der Abdeckung weist dabei bevorzugt Abdeckungssegmente auf, die bei einem Entfalten des Gassackes in Freiräume zwischen den Speichen des Lenkrades scharnieren. Die Seitenwand ist im Bereich der Abdeckungssegmente mit einem Trägerelement für den Gasgenerator verbunden und dabei bevorzugt in der Nähe des Bodens des Trägerelements an diesem befestigt, so daß ein großer seitlicher Öffnungsquerschnitt zur Verfügung steht.

In einer weiteren bevorzugten Ausgestaltung ist zwischen dem oberen/mittleren Bereich der Abdeckung und dem Gassackpaket des Airbagmoduls ein Deckblech angeordnet. Das Deckblech nimmt bei Entfalten des Gassacks entstehende Kräfte und Belastungen auf und hält diese dadurch von den nicht zu öffnenden Bereichen der Abdeckung fern. Dabei ist das Deckblech bevozugt fest mit einer Gasleiteinrichtung oder dem Gasgenerator verbunden. In einer Weiterbildung dieser Erfindungsvariante weist das Deckblech Seitenwände auf, die fest mit einem Trägerelement für den Gasgenerator verbunden sind. Dabei kann vorgesehen sein, daß das Deckblech und das Trägerelement einteilig ausgeführt sind.

Eine weitere Ausbildung der Erfindung sieht vor, daß der obere und mittlere Bereich und der untere Bereich der Abdeckung aus unterschiedlichen Materialien bestehen. Beispielsweise besteht der obere/mittlere Bereich der Abdeckung aus einem Metall und der untere Bereich der Abdeckung aus einem Kunststoff. Der obere und mittlere Bereich der Abdeckung und der untere Bereich der Abdeckung sind dabei bevorzugt formschlüssig miteinander verbunden.

Eine weitere Erfindungsvariante weist Mittel zur ständigen Fixierung des Gassack während seiner Entfaltung über einer Gasleiteinrichtung oder dem Gasgenerator auf. Diese Fixiermittel nehmen während der Entfaltung eine Fixierung des Gassacks zumindest unterhalb des mittleren Bereiches der Abdeckung vor. Die Fixiermittel sind dazu bevorzugt mindestens mit dem mittleren Bereich der Abdeckung fest verbunden. Als Fixiermittel wird bevorzugt ein im wesentlichen quer verlaufendes bügelartiges Element verwendet, das fest mit einem Trägerelement für den Gasgenerator verbunden ist.

Es ist ersichtlich, daß durch die erfindungsgemäße Ausgestaltung des Airbagmoduls nicht nur die Schutzwirkung für in oop-Lage befindliche Insassen und bei einem Sekundäraufprall des Insassen verbesert wird, sondern daß sich daraus Vorteile für die Fertigung des Airbagmoduls und des Lenkrades und damit Kostenvorteile ergeben. Eine komplette Vorfertigung des Lenkrades mit dem Airbagmodul wird erleichtert.

Die Erfindung soll in Ausführungsbeispielen anhand von Zeichnungen erläutert werden. Es zeigen:
- Fig. 1: eine erste Ausführungsform eines Fahrerairbagmoduls vor Zündung des Gasgenerators im Schnitt;
- Fig. 2: eine Draufsicht auf das Airbagmodul nach Fig. 1 mit Abdeckung aus der Sicht des Fahrers;
- Fig. 3: eine Draufsicht auf das Airbagmodul nach Fig. 1 ohne Abdeckung aus der Sicht des Fahrers;
- Fig. 4: das Airbagmodul nach Fig. 1 nach Zündung des Gasgenerators, unmittelbar vor Öffnung der Abdeckung im Schnitt;
- Fig. 5: eine zweite Ausführungsform eines Fahrerairbagmoduls vor Zündung des Gasgenerators im Schnitt;
- Fig. 6: eine Draufsicht auf das Airbagmodul nach Fig. 5 mit Abdeckung aus der Sicht des Fahrers;
- Fig. 7: eine Draufsicht auf das Airbagmodul nach Fig. 5 ohne Abdeckung aus der Sicht des Fahrers;
- Fig. 8: eine dritte Ausführungsform eines Fahrerairbagmoduls vor Zündung des Gasgenerators im Schnitt;
- Fig. 9: eine vierte Ausführungsform eines Fahrerairbagmoduls vor Zündung des Gasgenerators im Schnitt;
- Fig. 10: eine fünfte Ausführungsform eines Fahrerairbagmoduls vor Zündung des Gasgenerators im Schnitt;
- Fig. 11: das Airbagmodul nach Fig. 10 nach Entfaltung des Gassackes im Schnitt;
- Fig. 12: eine Darstellung der Gassackentfaltung bei einem erfindungsgemäßen Fahrerairbagmodul unter oop-Bedingungen;
- Fig. 13: eine Darstellung der freien Gassackentfaltung bei einem erfindungsgemäßen Airbagmodul;
- Fig. 14: den ausgebreiteten Gassack vor der Faltung;
- Fig. 15: den Gassack nach Fig. 14 nach einem ersten Faltschritt;
- Fig. 16: eine sechste Ausführungsform eins Fahrerairbagmoduls vor Zündung des Gasgenerators im Schnitt;
- Fig. 17: eine Draufsicht auf das Airbagmodul nach Fig. 16 ohne Abdeckung aus der Sicht des Fahrers;
- Fig. 18: eine siebente Ausführungsform eines Fahrerairbagmoduls mit rippenförmigen Deformationselementen im Schnitt;
- Fig. 19: eine achte Ausführungsform eines Fahrerairbagmoduls mit einer besonderen Ausbildung des oberen und mittleren Bereichs der Abdeckung im Schnitt;
- Fig. 20: eine neunte Ausführungsform mit einer besonderen Ausbildung des unteren Bereichs der Abdeckung im Schnitt;
- Fig. 21: den vorgefalteten Gassack nach Fig. 15 mit einer zusätzlichen Fixierung;
- Fig. 22: den Gassasck nach Fig. 21 in der Draufsicht:
- Fig. 23: eine zehnte Ausführungsform eines Fahrerairbagmoduls mit einer besonderen Ausbildung der Gasleiteinrichtung;
- Fig. 24: eine Draufsicht auf eine elfte Ausführungsform eines Fahrerairbagmoduls mit einer besonderen Anbindung der Gassackabdeckung;
- Fig. 25: einen Teilschnitt durch das Airbagmodul nach Fig. 24 entlang der Linie A-A;
- Fig. 26: eine zwölfte Ausführungsform eines Fahrerairbagmoduls vor Zündung des Gasgenerators im Schnitt mit einer speziellen Ausgestaltung zwischen feststehendem Happenbereich und Gassackpaket;
- Fig. 27: eine dreizehnte Ausführungsform eines Fahrerairbagmoduls vor Zündung des Gasgenerators im Schnitt mit einer weiteren Ausgestaltung zwischen feststehendem Kappenbereich und Gassackpaket;
- Fig. 28: eine vierzehnte Ausführungsform eines Fahrerairbagmoduls vor Zündung des Gasgenerators im Schnitt mit einer speziellen Ausführung der Abdeckung;
- Fig. 29: eine fünfzehnte Ausführungsform eines Fahrerairbagmoduls vor Zündung des Gasgenerators im Schnitt mit einer weiteren Ausgestaltung zwischen feststehendem Kappenbereich und Gassackpaket.

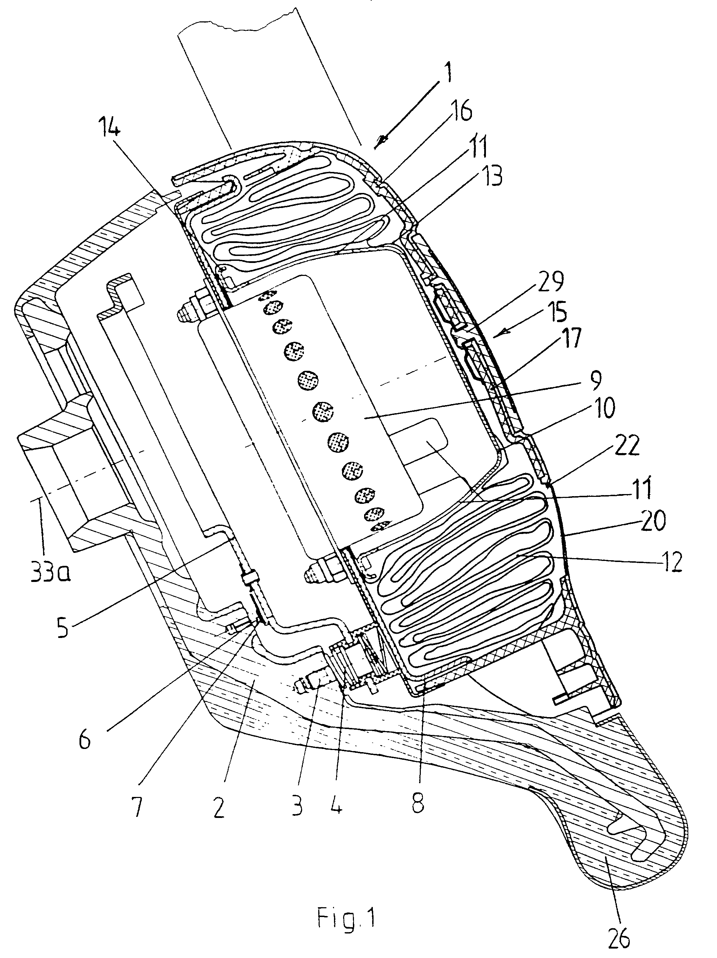

Das in der Fig. 1 dargestellte Fahrerairbagmodul 1 ist an einem Lenkradskelett 2 mittels Schrauben 3, von denen in der Figur nur eine erkennbar ist, unter Zwischenlage je einer Feder 4 in Richtung der Schraubenachse beweglich befestigt. Mittels der Schraube 3 ist weiterhin eine Kontaktbrücke 5 so befestigt, daß beim Niederdrücken des Airbagmoduls Hupenkontakte 6, 7 geschlossen werden.

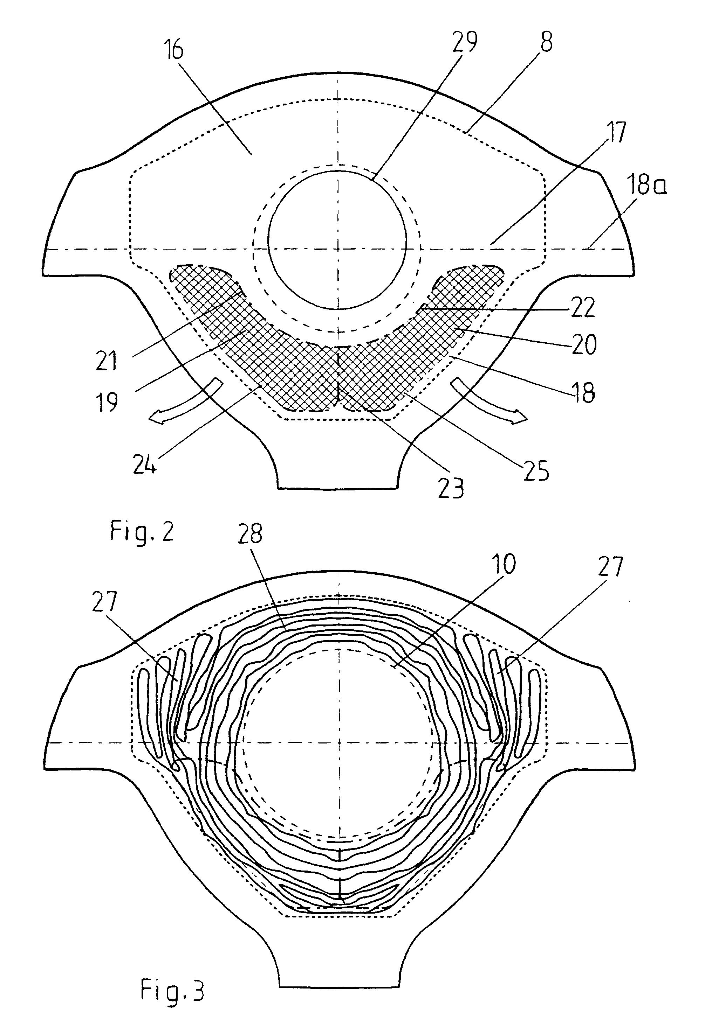

Das Airbagmodul 1 umfaßt einen Generatorträger 8, auf dem ein topfförmiger Gasgenerator 9 befestigt ist. Dieser ist von einer Gasleiteinrichtung 10 umgeben, die Ausströmöffnungen 11 aufweist. Ein Gassack 12 ist in gefalteter Lage seitlich der Gasleiteinrichtung angeordnet. Dabei erstreckt sich über der Gasleiteinrichtung nur eine Gassacklage 13. Wie aus der Fig. 3 erkennbar ist, erstreckt sich bei dieser Ausführungsform die gefaltete Gassackpackung rund um die Gasleiteinrichtung 10. Der Gassack ist zwischen einem Flansch 14 der Gasleiteinrichtung 10 und dem Generatorträger 8 am Rand der Einblasöffnung des Gassacks 12 eingespannt.

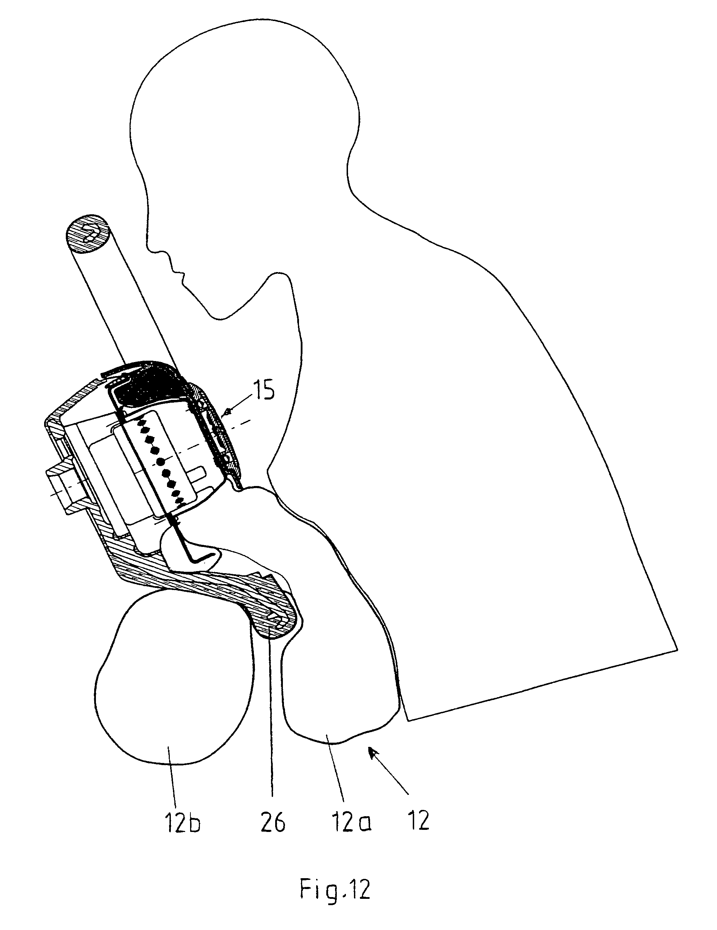

Die Gassackpackung ist von einer Abdeckung 15 umgeben. Diese Abdeckung weist einen oberen Bereich 16 und einen mittleren Bereich 17 auf, dem sich ein unterer Bereich 18 anschließt (Fig. 2). Die oberen und mittleren Bereiche bilden eine Einheit und weisen eine solche Stärke auf, daß sie durch den sich entfaltenden Gassack 12 nicht aufgerissen werden sondern sich nur dehnen können. Der untere Bereich 18 besteht aus zwei Segmenten 19, 20, die entlang von Aufreißlinien 21, 22 und 23 bei Entfaltung des Gassacks vom mittleren Bereich 17 sowie voneinander getrennt werden und um Filmscharniere 24, 25 aufklappen. Dadurch kann sich der Gassack nach unten in Richtung des unteren Bereichs 26 des Lenkradkranzes entfalten, wie es in Fig. 12 dargestellt ist.

Der untere Bereich 18 der Abdeckung erstreckt sich unterhalb einer Linie 18a, die quer zur Fahrtrichtung verläuft und die Lenksäulenmittelachse 33a schneidet. Bei der Entfaltung des Gassacks werden in der in Fig. 3 dargestellten Geradeausstellung des Lenkrades die seitlich der Gasleiteinrichtung liegenden Falten 27 des Gassacks 12 auch seitlich an der Gasleiteinrichtung 10 vorbei entfaltet. Die oben liegenden Falten 28 werden vorzugsweise durch den Raum zwischen der Gasleiteinrichtung 10 und dem oberen und mittleren Bereich 16, 17 der Abdeckung hindurch entfaltet. Auf die Entfaltung wird später nochmals eingegangen.

Am oberen und mittleren Bereich 16, 17 ist ein Firmenlogo 29 befestigt. Da diese Bereiche ihre Lage nach Zündung des Gasgenerators nicht verändern, gibt es keine oop-bedingten Einschränkungen beim Design der Abdeckung hinsichtlich der Größe des Firmenlogos.

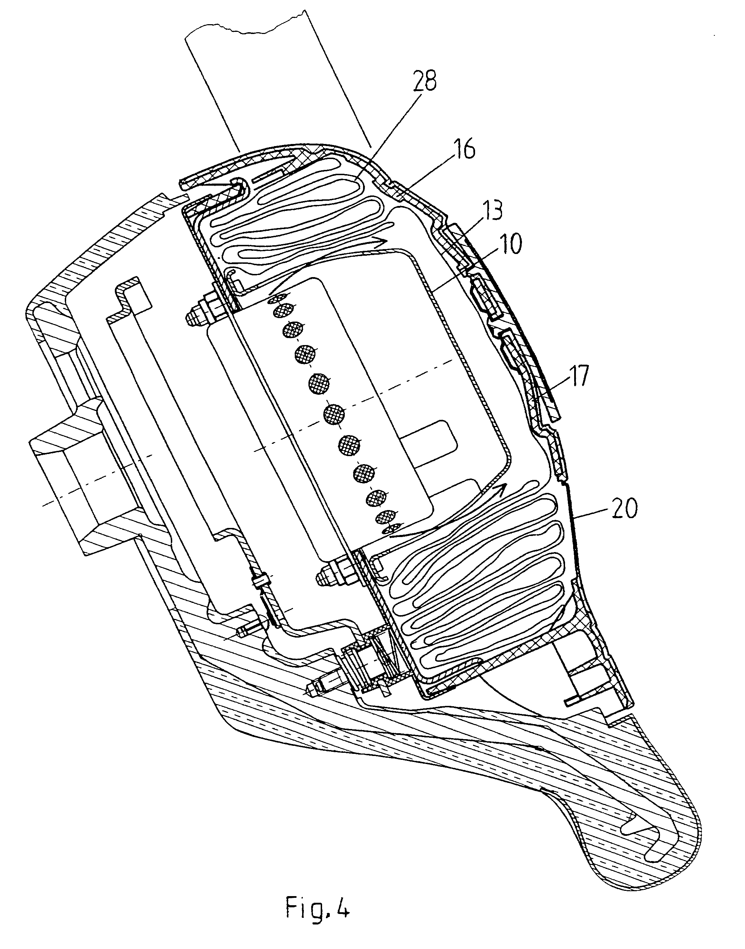

Wie aus der Fig.4 ersichtlich ist, wird unmittelbar nach Zündung des Gasgenerators über der Gasleiteinrichtung 10 eine Blase des Gassacks gebildet, wodurch der obere und mittlere Bereich 16, 17 der Abdeckung gedehnt werden, so daß der Raum zwischen dieser und der Gasleiteinrichtung soweit vergrößert wird, daß sich die Falten 28 durch diesen Raum hindurch entfalten können. Anschließend oder gleichzeitig öffnen sich dann die Segmente 19, 20, so daß sich der Gassack durch die dann entstehende Öffnung in Richtung des unteren Bereichs 26 des Lenkradkranzes entfaltet.

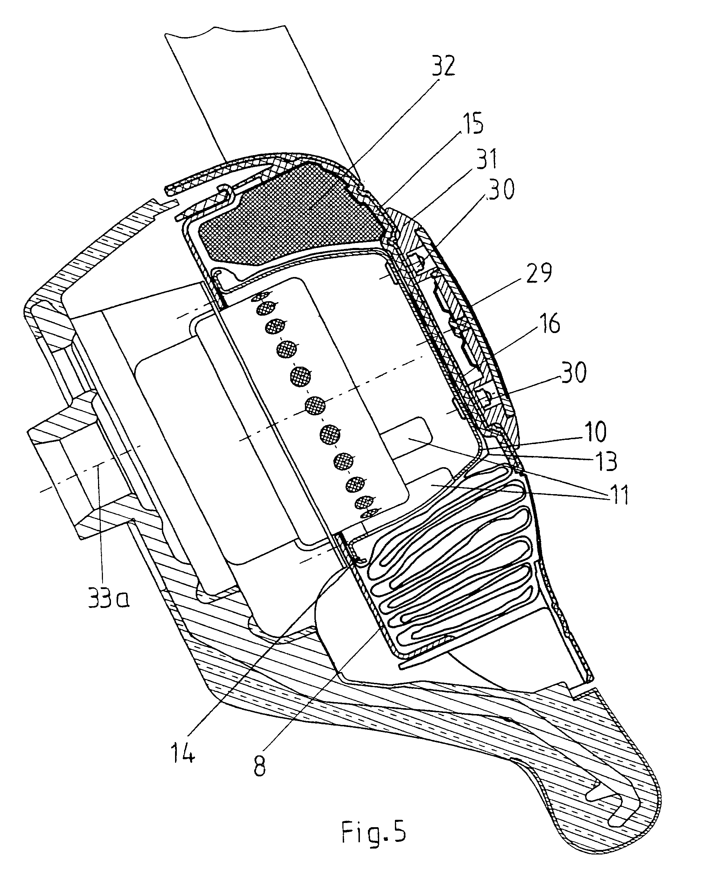

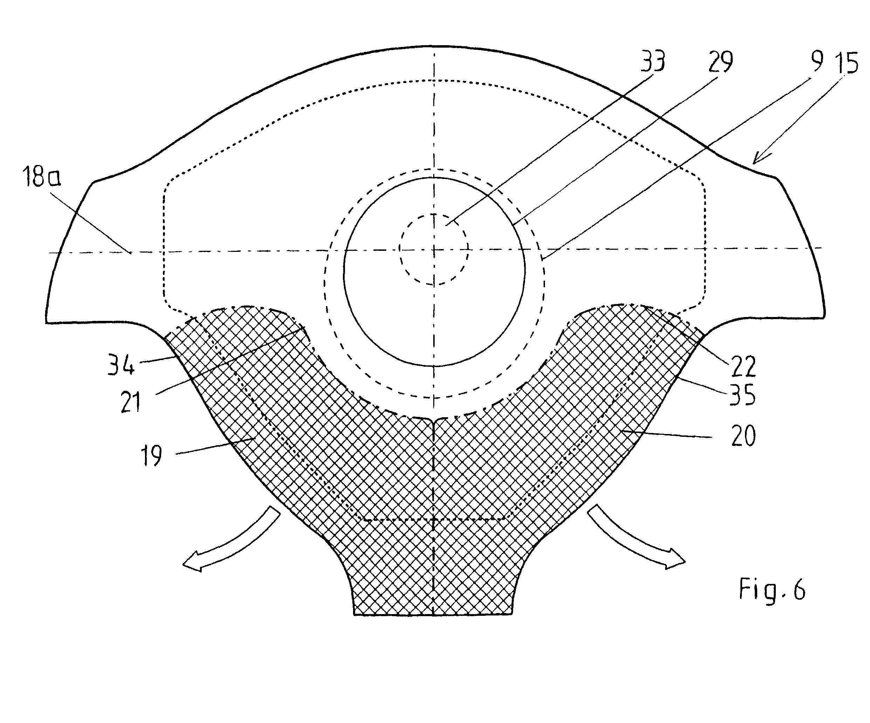

Bei der Ausführungsform der Figuren 5 bis 7 sind der obere und mittlere Bereich 15, 16 der Abdeckung mittels Befestigungselementen 30 mit der Gasleiteinrichtung 10 verbunden. Dabei liegt die Abdeckung in diesem Bereich zwischen einem Trägerelement 31 für das Firmenlogo 29 und der Gasleiteinrichtung. An dieser Stelle ist bei dieser Ausführungsform der Gassack in seinem unteren Teil mit eingespannt, während der Gassack im Bereich des Einblasmundes wie im vorhergehenden Ausführungsbeispiel zwischen dem Generatorträger 8 und dem Flansch 14 der Gasleiteinrichtung 10 befestigt ist.

Da bei dieser Ausführungsform zwischen Gasleiteinrichtung 10 und Abdeckung kein freier Raum für die Entfaltung des Gassacks vorhanden ist, ist der Gassack U-förmig gefaltet, d.h. die gefaltete Gassackpackung erstreckt sich mit Falten 36, 37 nur seitlich und unterhalb der Gasleiteinrichtung 10. Oberhalb der Gasleiteinrichtung ist ein Platzhalter 32 vorgesehen, der auch als Deformationselement ausgebildet sein kann. Er gewährleistet auch die U-Form des gefalteten Gassackpaketes.

Die Segmente 19, 20 des unteren Bereichs der Abdeckung erstrecken sich wie bei der vorigen Ausführungsform unterhalb der Linie 18a die die Lenksäulenachse 33a der Lenksäule 33 schneidet. Bei diesem Ausführungsbeispiel verlaufen die Aufreißlinien 21, 22 bis an die Ränder 34, 35 der Abdeckung 15, wodurch ein größerer Öffnungsquerschnitt erzielt wird. Diese Ränder sind als Filmscharniere ausgebildet.

Die Ausströmöffnungen 11 der Gasleiteinrichtung 10 sind so angeordnet, daß der Austritt der Gase vorwiegend in Richtung des Öffnungsbereiches der Abdeckung erfolgt.

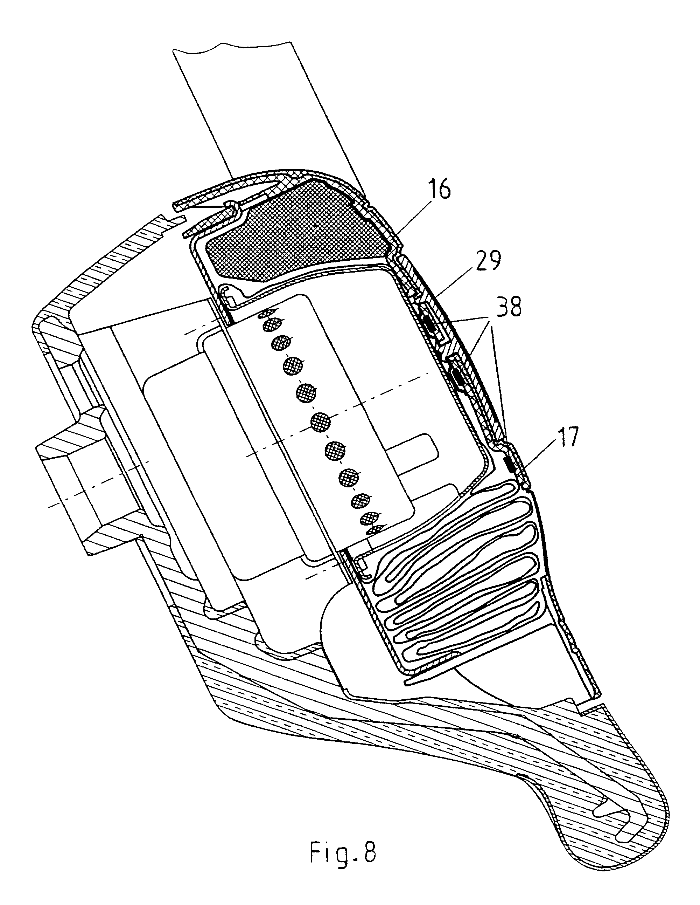

Die Ausführungsform der Fig. 8 unterscheidet sich von der der Figuren 5 bis 7 darin, daß der mit dem Firmenlogo 29 versehene obere und mittlere Bereich 16, 17 nicht mit der Gasleiteinrichtung verbunden sind. Ein Öffnen dieser Bereiche wird vielmehr durch Aussteifungselemente 38 aus Metall in den Bereichen 16, 17 verhindert. Die Aussteifungselemente 38 reichen bis in die Randbereiche der Abdeckung und sind dort befestigt.

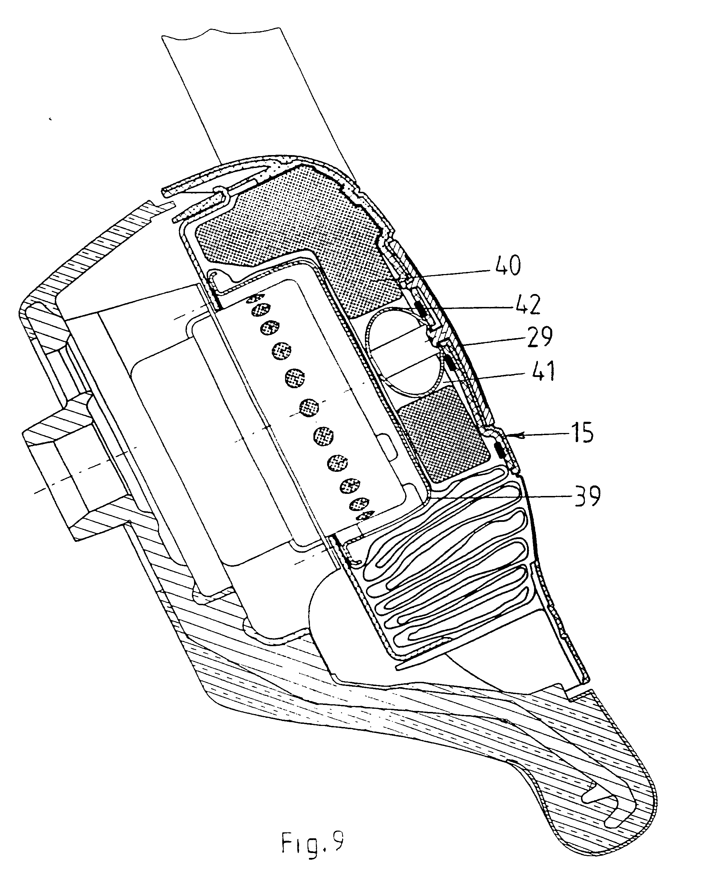

Die Ausführungsform der Fig. 9 unterscheidet sich von der der Fig. 8 durch eine flach ausgeführte Gasleiteinrichtung 39. Weiterhin erstreckt sich ein Platzhalter 40 zusätzlich in den Raum zwischen der Abdeckung 15 und der Gasleiteinrichtung 39. Dieser Platzhalter ist als Deformationselement ausgebildet. Zusätzlich ist in einem Freiraum 41 des Platzhalters 40 ein Deformationselement 42 eingelegt, das mit dem Firmenlogo 29 verbunden ist. Dadurch wird das Energieabsorptionsvermögen der Abdeckung weiter verbessert.

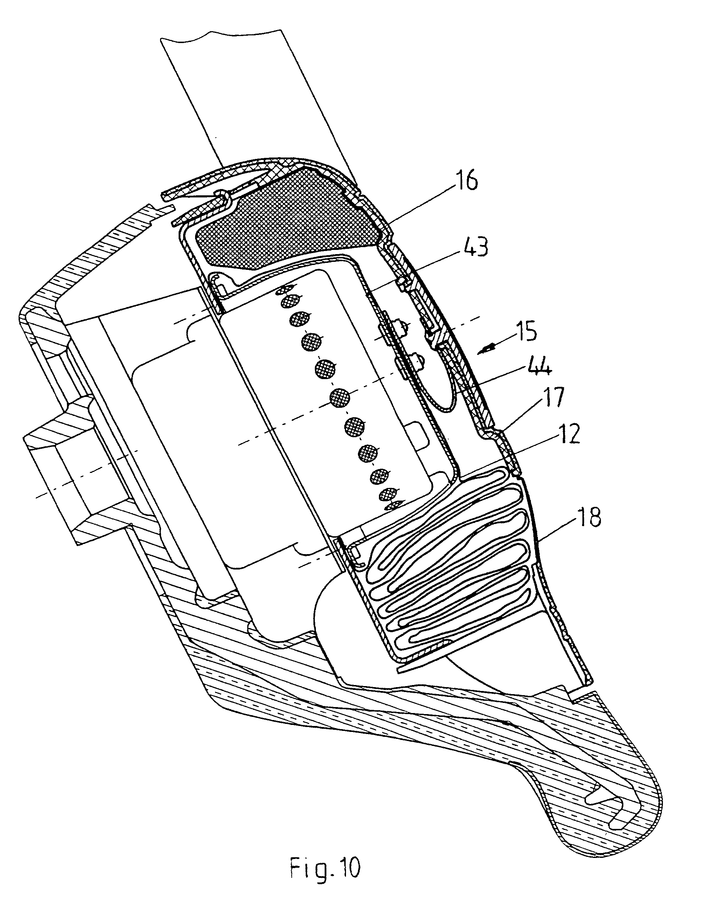

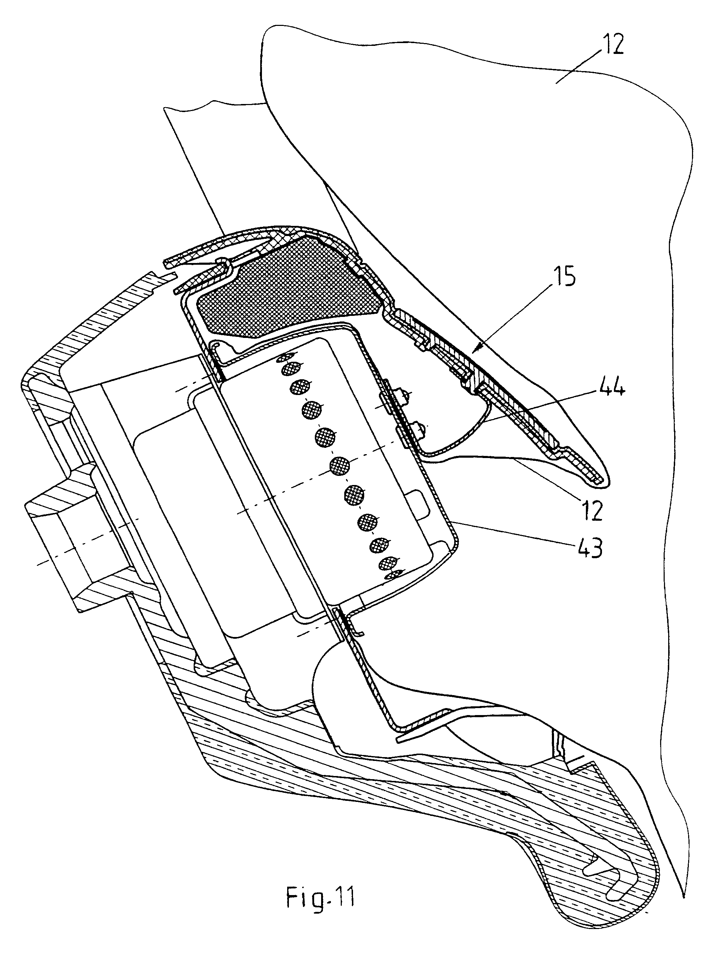

Bei der Ausführungsform der Figuren 10 und 11 entspricht die Gassackanordnung und die Gaseinleitung in den Gassack der Ausführungsform der Figuren 5 bis 7. Abweichend von dieser Ausführungsform können der obere und der mittlere Bereich 16, 17 bei der Ausführungsform der Figuren 10 und 11 um einen geringen Betrag geöffnet werden. Hierzu ist zwischen der Gasleiteinrichtung 43 und der Abdeckung 15 ein Deformationselement 44 angeordnet. Zwischen diesem und der Gasleiteinrichtung 43 ist der Gassack 12 in seinem unteren Bereich zusätzlich befestigt.

Das Deformationselement 44 wird durch den sich entfaltenden Gassack gestreckt, wie es in Fig. 11 dargestellt ist. In dieser Phase begrenzt das Deformationselement den Öffnungswinkel der Abdeckung 15 so, daß die Gasleiteinrichtung 43 immer noch abgedeckt ist. Die Fig. 11 zeigt das Airbagmodul mit voll entfaltetem Gassack 12. In der in Fig. 11 dargestellten Lage kann das Deformationselement 44 bei einem Sekundäraufprall die Energie eines aufprallenden Insassen auf ein akzeptables Niveau absorbieren.

In der Fig. 12 ist die Entfaltung des Gassacks 12 bei einem erfindungsgemäßen Airbagmodul unter oop-Bedingungen dargestellt. Der Fahrer hat vor der Entfaltung bereits die dargestellte nach vorn geneigte Haltung, d.h., er ist unmittelbar vor dem Lenkrad positioniert. In der in der Fig. 12 dargestellten ersten Entfaltungsphase tritt, wie Versuche belegt haben, der Gassack 12 nach unten aus und schiebt sich mit einem Abschnitt 12a zwischen den unteren Bereich 26 des Lenkradkranzes und den Brustkorb des Insassen. Ein zweiter Abschnitt 12b des Gassacks 12 entfaltet sich vor dem unteren Bereich 26 des Lenkradkranzes zwischen den Lenkradspeichen. Infolge dieser Entfaltung in zwei Richtungen wird die Belastung für den in oop-Lage befindlichen Insassen in der Anfangsphase der Entfaltung zusätzlich verringert. In Abhängigkeit von der Position des Insassen wird eine anschließende Entfaltung in Richtung des oberen Bereichs des Lenkradkranzes vollkommen bzw. teilweise unterbunden. Da der obere und mittlere Bereich der Abdekkung 15 ihre Lage nicht verändern, wird der in oop-Lage befindliche Insasse nicht durch das Umschlagen großformatiger Klappensegmente belastet.

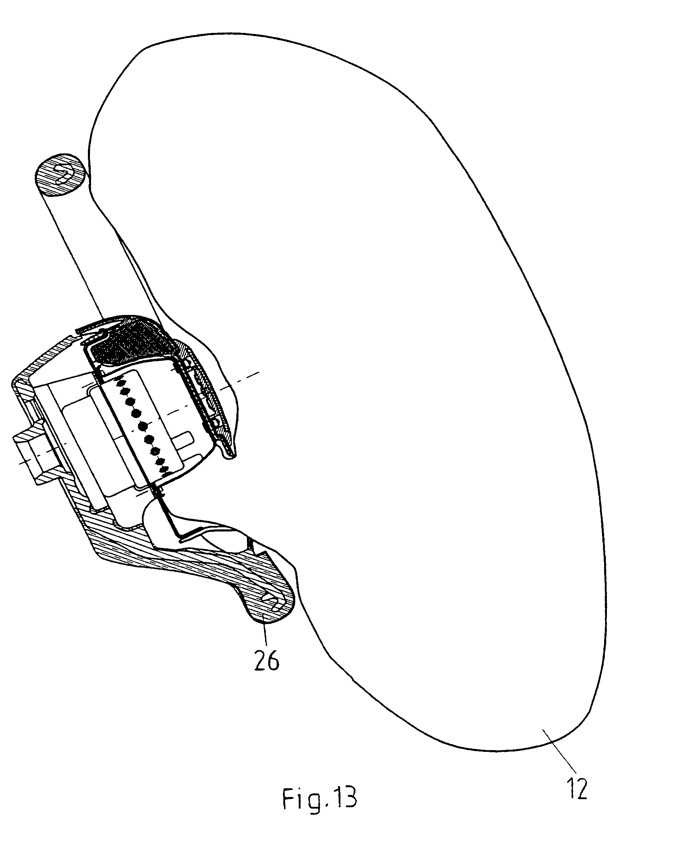

In der Fig. 13 ist die freie Entfaltung des Gassacks dargestellt, die eintritt, wenn der Fahrer die Normalposition einnimmt, d.h., wenn er einen ausreichend großen Abstand zum Lenkrad hat. Auch in diesem Fall wird der Gassack, wie in der Fig. 12 dargestellt, wegen der erfindungsgemäßen Modulanordnung in der ersten Phase der Entfaltung in Richtung des unteren Bereichs 26 des Lenkradkranzes orientiert. Anschließend erfolgt eine Entfaltung in Richtung des Insassen und des oberen Bereichs des Lenkradkranzes. Der vollständig gefüllte Gassack nimmt die in der Fig. 13 dargestellte Position ein, d.h., er bedeckt wie bei Airbagmodulen des Standes der Technik das gesamte Lenkrad.

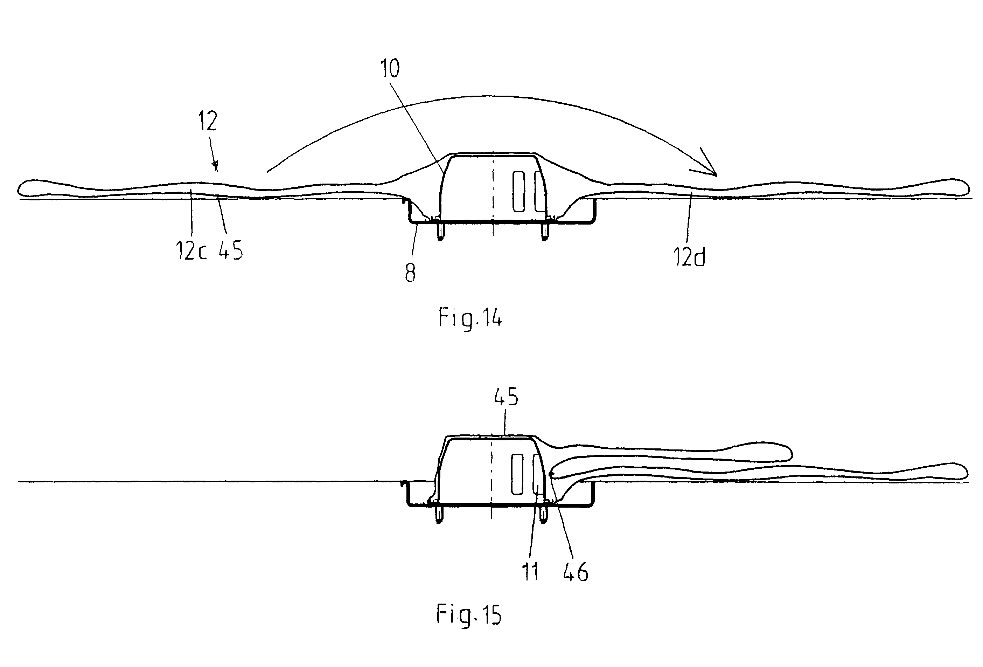

In den Figuren 14 und 15 ist eine bevorzugte Faltung für die erfindungsgemäßen Airbagmodule dargestellt. Der mit der Gasleiteinrichtung 10 komplettierte Gassack 12 wird zusammen mit dem Generatorträger 8 in die Aufnahme einer nicht dargestellten Faltvorrichtung eingelegt und ausgebreitet. Anschließend wird ein Abschnitt 12c des Gassacks 12 auf den gegenüberliegenden Abschnitt 12d umgeschlagen, der sich beim späteren Einbau des Airbagmoduls in das Lenkrad in Richtung des unteren Bereiches 26 des Lenkradkranzes (Fig. 12) erstreckt. Dabei wird der Gassack so positioniert, daß die Gassackunterseite 45 - bei einem zweitteiligen Gassack ist das die Gassackunterplatte - einlagig über der Gasleiteinrichtung 10 liegt und daß die Faltkante 46 unmittelbar vor den Ausströmöffnungen 11 positioniert ist. Im folgenden Faltprozeß wird durch hier nicht dargestellte Maßnahmen gewährleistet, daß die dargestellte Zuordnung der Gassackabschnitte 12c und 12d erhalten bleibt und der in den Figuren 5 bis 7 dargestellte gassackfreie Bereich realisiert wird. Durch parallel zur Tischebene, in der der Gassack bei der Faltung ausgebreitet ist, in Richtung der Gasleiteinrichtung verfahrbare nicht dargestellte Faltschieber wird der Gassack zusammengerafft und in die z.B. in den Figuren 5 bis 7 dargestellte Form gebracht.

Alternativ dazu kann der Gassack ohne den Schritt des Umschlagens, direkt in der erwähnten Weise gerafft werden. In diesem Fall liegt die Gassackoberseite - bei einem zweiteiligen Gassack ist das die Gassackoberplatte - einlagig über der Gasleiteinrichtung und es ergibt sich das in den Figuren 1 bis 3 dargestellte Gassackpaket.

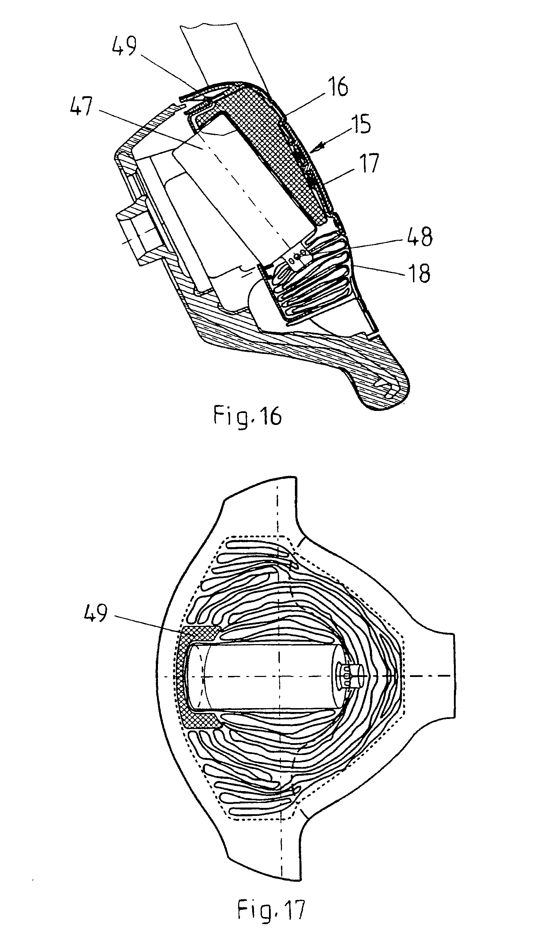

Bei der Ausführungsform der Figuren 16 und 17 ist als Gasgenerator ein Rohrgasgenerator 47 vorgesehen, der in der dargestellten geneigten Lage eingebaut ist, wobei dessen Abströmöffnungen 48 im unteren Bereich 18 der Abdeckung, d.h., im Öffnungsbereich der Abdeckung liegen. Dadurch ist keine Gasleiteinrichtung mit im unteren Bereich angeordneten Ausströmöffnungen 11 erforderlich. Oberhalb des Rohrgasgenerators 47 erstreckt sich ein Platzhalter 49, der die U-Form des gefalteten Gassackpakets gewährleistet (Fig. 17). Der Platzhalter 49 verläuft weiterhin im Raum zwischen dem oberen und mittleren Bereich 16, 17 der Abdeckung 15 und dem Rohrgasgenerator 47 über dessen gesamte Länge und ist als Deformationselement ausgebildet.

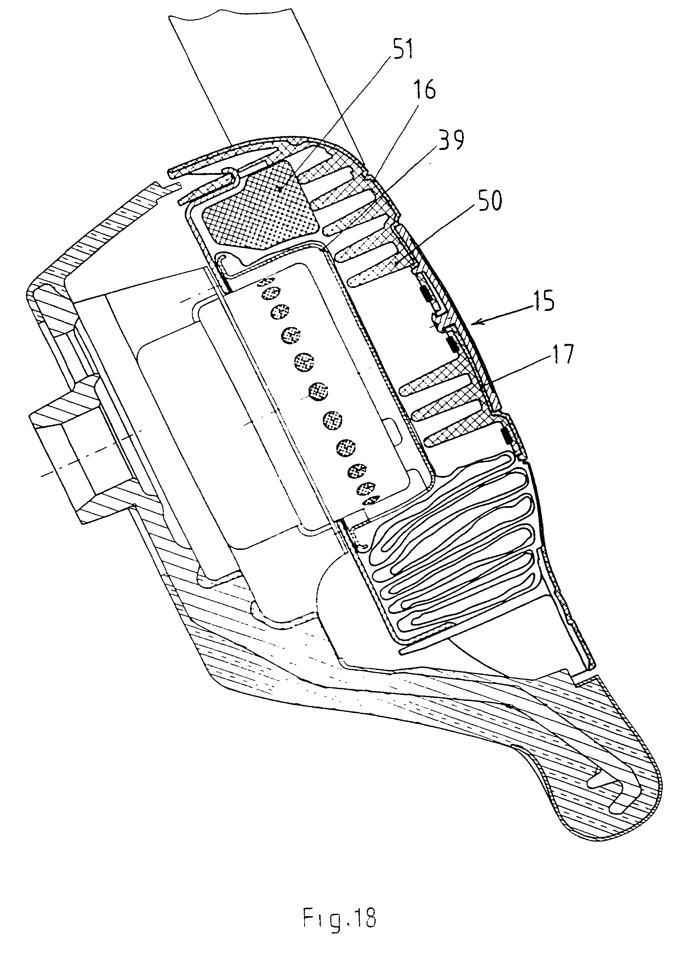

Bei der Ausführungsform der Fig. 18 ist wie bei der Ausführungsform der Fig. 9 eine flache Gasleiteinrichtung 39 vorgesehen. An den oberen und mittleren Bereich 16, 17 der Abdeckung 15 sind rippenförmige Deformationselemente 50 angespritzt, die sich in den Raum zwischen der Abdeckung 15 einerseits und der Gasleiteinrichtung 39 sowie einem Platzhalter 51 andererseits erstrecken. Der Platzhalter 51 ist wie bei der Ausführungsform der Fig. 5 oberhalb der Gasleiteinrichtung 39 vorgesehen.

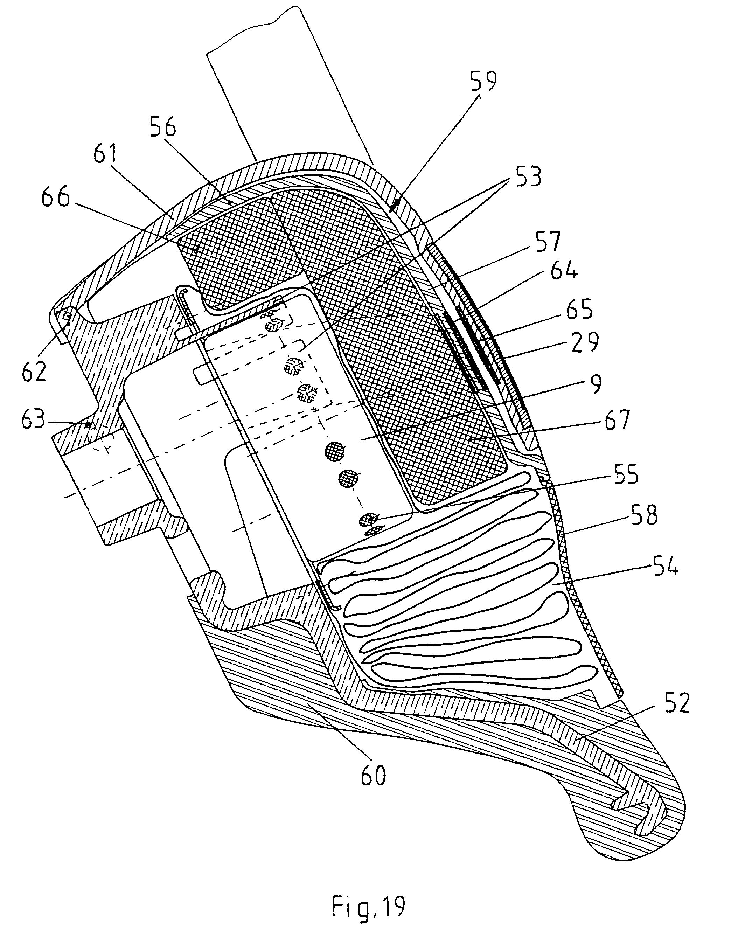

Bei der Ausführungsform der Fig. 19 sind die Gasleiteinrichtung und die Abdeckung integraler Bestandteil des Lenkrades. Dabei ist die Gasleiteinrichtung integraler Bestandteil des Lenkradskeletts 52. Die Gasleiteinrichtung besteht aus ringförmigen Segmenten 53, die den Gasgenerator 9 teilweise umschließen, und dabei nur die dem Öffnungsbereich 54 zugewandten Generatorabströmöffnungen 55 offen lassen.

Der feststehende obere und mittlere Bereich 56, 57 der Abdeckung 59 ist Bestandteil der Skelettumschäumung 60. Der untere Bereich 58 der Abdeckung 59 ist als separates Teil über geeignete Mittel (nicht dargestellt) am Lenkrad befestigt. Zwischen dem oberen/mittleren Bereich 56, 57 und dem unteren Bereich 58 sind keine Reißnähte vorgesehen, sondern die Verbindung erfolgt durch Formschluß.

Zusätzlich ist bei dieser Ausführungsform ein bügelartiges Betätigungselement 61 für die Hupe angeordnet. Das Betätigungselement 61 ist an einem Abschnitt 62 des Lenkradskeletts in Höhe der Lenkradnabe 63 angelenkt, und greift über den oberen und mittleren Bereich 56, 57 der Abdeckung 59. Im mittleren Bereich 57 ist ein Kupenkontakt 64 vorgesehen, dem ein Hupenkontakt 65 im Betätigungselement 61 gegenüberliegt. Der mittlere Bereich 57 liegt gegenüber dem unteren Bereich 58 der Abdeckung tiefer, so daß die Oberflächen des Betätigungselementes 61 und des unteren Bereichs 58 zueinander fluchten. Das Firmenlogo 29 ist im Betätigungselement 61 vorgesehen.

Bei dieser Ausführungsform sind zwei Platzhalter vorgesehen, wobei ein Platzhalter 66 oberhalb des Gasgenerators 9 und der zweite Platzhalter 67 im wesentlichen im Raum zwischen dem Gasgenerator 9 und dem mittleren Bereich 57 der Abdeckung angeordnet ist.

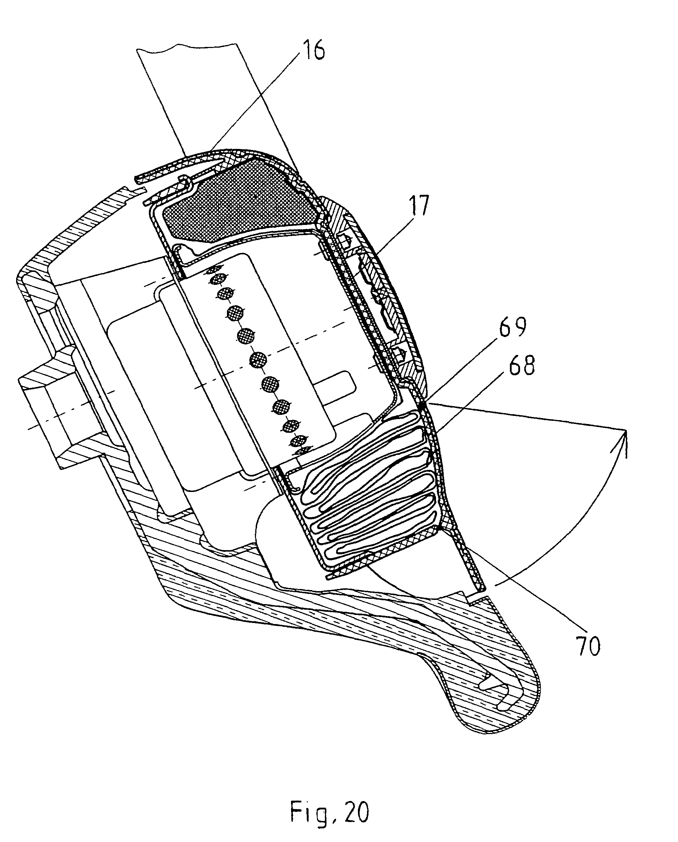

Bei der Ausführungsform der Fig. 20 ist ein oberer und mittlerer Bereich 16, 17 vorgesehen, wie er in der Fig. 5 dargestellt ist. Abweichend von dieser Ausführungsform ist der untere Bereich der Abdeckung gestaltet. Es ist ein unterer Bereich 68 der Abdeckung vorgesehen, der über ein Filmscharnier 69 mit dem mittleren Bereich 17 verbunden ist. Die Öffnung des unteren Bereichs 68 erfolgt ausgehend von den Randbereichen. Hierzu verlaufen Reißnähte 70 unterhalb der Abdeckung in den Randbereichen des unterer Bereichs 68. Dadurch führt der Druck des Gassackpackages auf die Innenseite der Abdeckung nicht zu einer Markierung der Reißnähte auf der Außenseite. Alternativ dazu kann der untere Bereich 68 im Gassackaustrittsbereich ohne Rand ausgeführt werden.

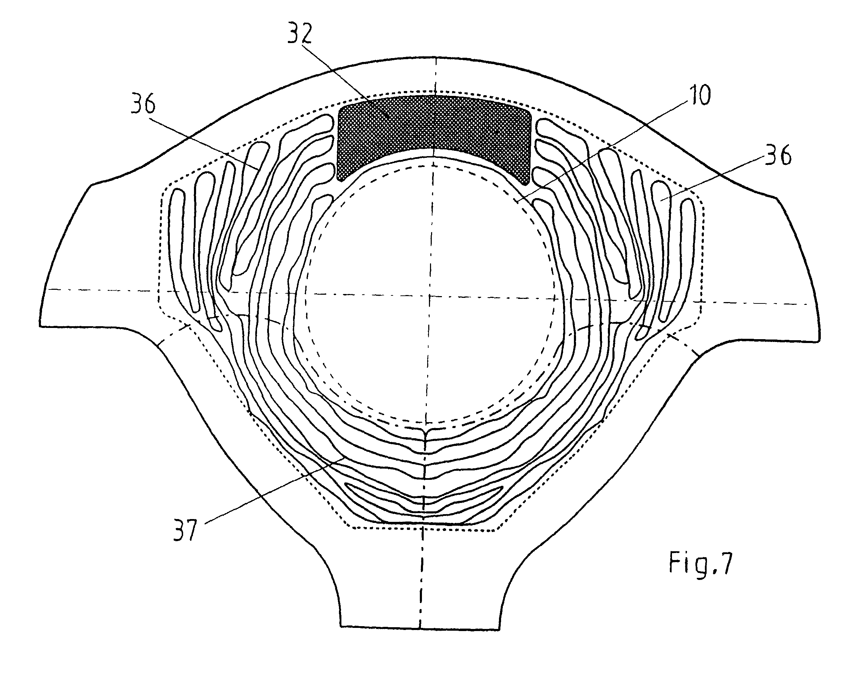

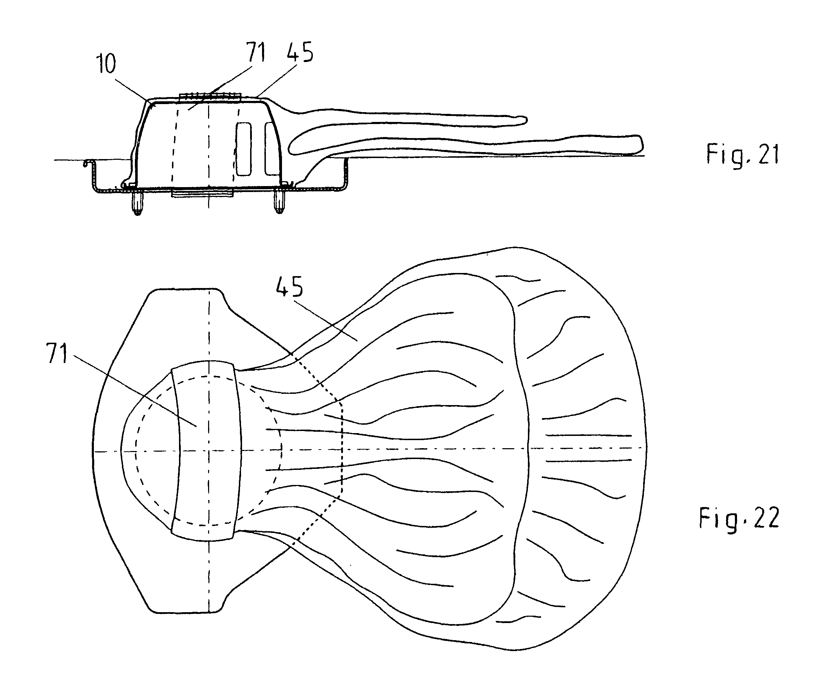

In den Figuren 21 und 22 ist der Faltzustand des Gassacks entsprechend der Fig. 15 dargestellt. Abweichend davon ist ist in den Figuren 21 und 22 das Airbagmodul mit Mitteln ausgestattet, die den Gassack während der Entfaltung über der Gasleiteinrichtung 10 bzw. über dem Gasgenerator zumindest zeitweise fixieren und so eine Krafteinwirkung auf die darüber liegenden Bereiche der Abdeckung minimieren. Als Fixiermittel ist ein Band 71 vorgesehen, das mit der Gassackunterplatte 45 vernäht ist und nach dem Umschlagen den Gassack straff umschlingt. Nach dem Falten ergibt sich ebenfalls die in Fig. 7 dargestellte Gassackverteilung.

Anstelle des Bandes 71 kann auch ein Bügel aus starrem Material vorgesehen sein.

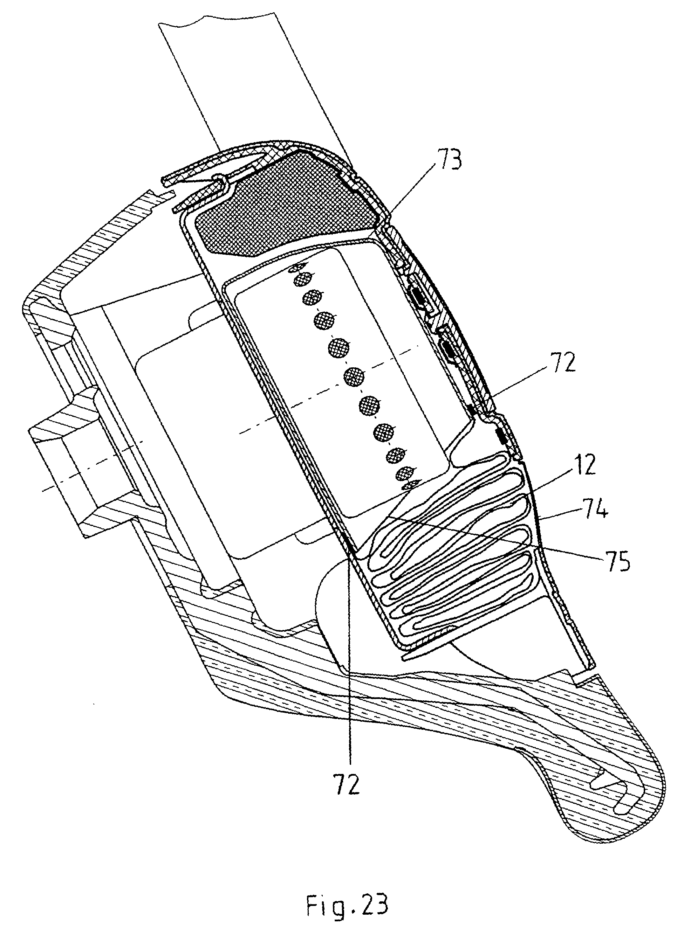

Bei der Ausführungsform der Fig. 23 ist der Gassack 12 gegenüber den vorhergehenden Ausführungsformen in anderer Weise befestigt. Er ist mit Hilfe von Befestigungsmitteln 72 an einer Gasleiteinrichtung 73 im Bereich der in Richtung des unteren Bereichs 74 der Abdeckung orierntierten Gasaustrittsöffnung 75 befestigt. Bei dieser Ausführungsform befindet sich deshalb abweichend zu den anderen Ausführungsformen keine Gassacklage zwischen der Gasleiteinrichtung und der Abdeckung. Dadurch ergibt sich der weitere Vorteil, daß die bei der Entfaltung des Gassacks auf die Abdeckung wirkenden Kräfte minimiert werden.

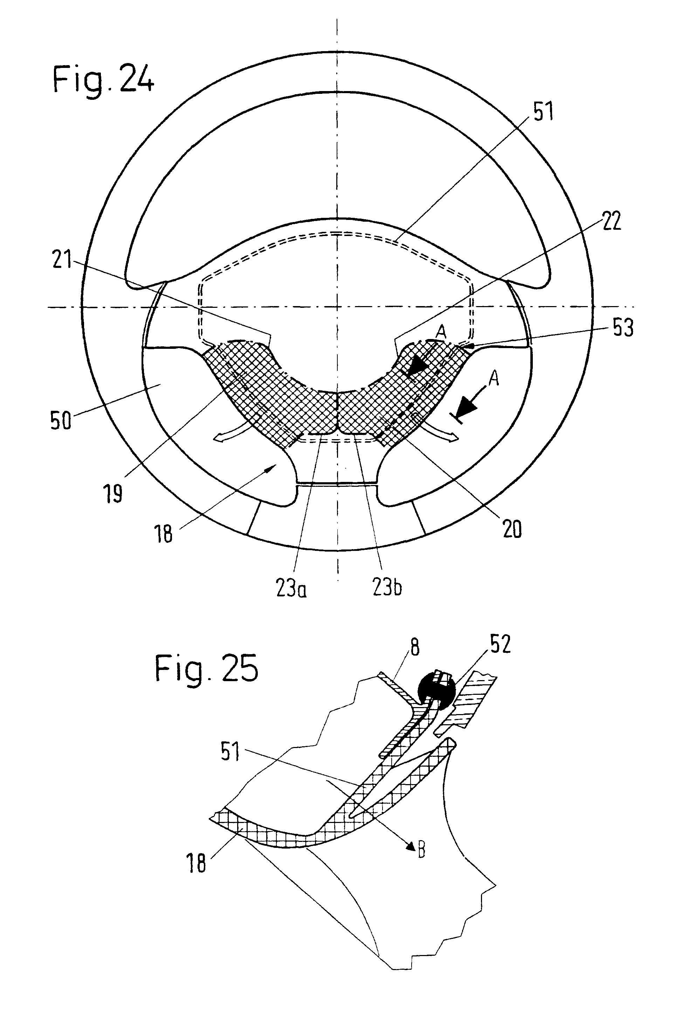

Die Fig. 24 und 25 zeigen eine Ausführungsform, bei der die Abdeckung eine Seitenwand 51 aufweist, die mit dem Boden des Generatorträgers 8 verbunden ist. Die beiden Segmente 19, 20 des unteren Bereiches 18 der Abdeckung weisen ähnlich der Fig. 2 Aufreißlinien 21, 22, 23a, 23b auf. Die Aufreißlinien verlaufen dabei durch die Seitenwand 51 bis zum Rand der Abdeckung.

Die Seitenwand 51 der Abdeckung ist im Bereich des jeweiligen Segmentes 19, 20 fest mit dem Generatorträger 8 verbunden. Im Ausführungsbeispiel der Fig. 25 wird die Verbindung durch eine Nietverbindung 52 hergestellt. Bei Entfaltung des Gassacks klappen die Segmente 19, 20 nach unten, wobei die Anbindungsstelle 52 der Seitenwand mit dem Generatorträger 8 als Drehpunkt dient. Um ein Aufklappen der Segmente 19, 20 entlang der Anbindungslinie der Seitenwand mit dem Boden des Generatorträgers 8 zu ermöglichen, verlaufen die Aufreißlinien an ihren Kreuzungspunkten 53 mit der Seitenwand 51 durch die Seitenwand bis zum Rand der Abdeckung durch, d.h. die Seitenwand ist an dieser Stelle eingeschnitten bzw. unterbrochen.

Durch diese Anbindung der Segmente 19, 20 am Generatorträger 8 wird ermöglicht, daß die Segmente 19, 20 nach dem Öffnen in Freiräume 50 zwischen den Speichen des Lenkrads scharnieren.

Die gewünschte Richtung der Entfaltung des Gassacks in einer oop-Situation ist in Fig. 25 durch den Pfeil B angegeben.

Um unter oop-Bedingungen eine möglichst seitliche Entfaltung des Gassacks zu erzielen und die Entfaltung vor dem Lenkradkreuz zu erleichtern (entsprechend Fig. 12, Abschnitt 12b des Gassackes), ist es zweckmäßig, die Anbindung der Seitenwand in der Nähe des Generatorträgerbodens vorzunehmen. Entsprechend erfolgt in Fig. 25 die Anbindung unterhalb des Bodens des Generatorträgers 8. Hierdurch wird ein großer seitlicher Öffnungsquerschnitt ermöglicht.

Diese Ausführungsform ermöglicht somit ein Aufreißen der Abdeckungssegmente 19, 20 derart, daß diese in die Freiräume 50 zwischen den Speichen scharnieren. Dabei verlaufen die Aufreißlinien durch die Seitenwand durch bis zum Rand der Abdeckung. Um einen möglichst großen seitlichen Öffnungsquerschnitt zu erzielen, ist die Seitenwand in diesem Bereich in der Nähe des Bodens des Generatorträgers mit diesem verbunden.

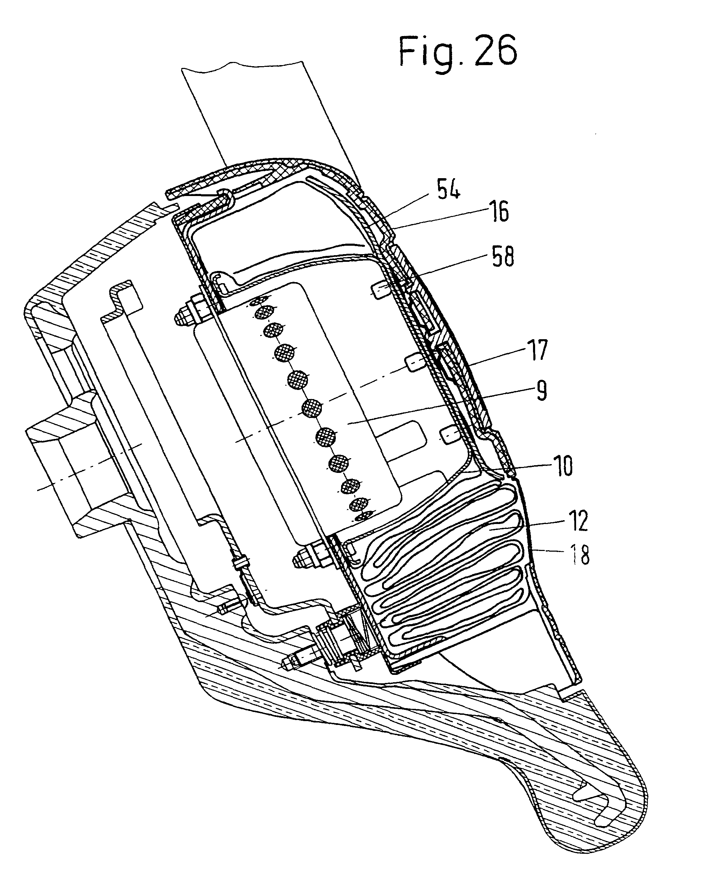

In der Fig. 26 ist zwischen dem oberen Bereich 16 und dem mittleren Bereich 17 der Abdeckung und dem gefalteten Gassack 12 ein Deckblech 54 angeordnet. Dieses weist aus Sicht des Fahrers eine Außenkontur auf, welche annähernd entlang der oberen Seitenwand der Abdeckung und der Aufreißlinien zwischen dem oberen/mittleren Bereich 16, 17 und dem unteren, zu öffnenden Bereich 18 verläuft. Das Deckblech 54 ist dabei fest mit der darunterliegenden Gasleiteinrichtung 10 verbunden, etwa mit dieser über Nietverbindungen 58 vernietet. Eine Gassacklage ist dabei zwischen der Gasleiteinrichtung 10 und dem Deckblech 54 eingespannt.

Durch das Deckblech werden die Kräfte und Belastungen, die bei Zündung des Gasgenerators 9 durch den sich entfaltenden Gassack 12 entstehen, von den nicht zu öffnenden Bereichen 16, 17 der Abdeckung ferngehalten.

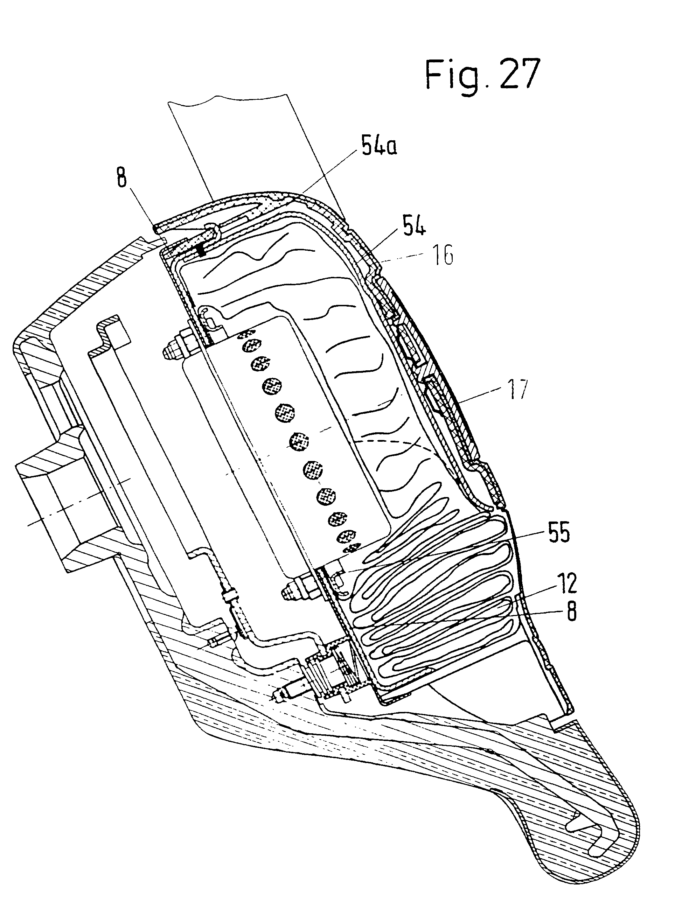

In Fig. 27 ist ebenfalls ein Deckblech 54 gemäß Fig. 26 vorgesehen. Anders als bei der Ausführungsform der Fig. 26 weist das Deckblech 54 zumindest teilweise Seitenwände 54a auf, entlang derer das Deckblech mit dem Generatorträger 8 fest verbunden ist. Ein weiterer Unterschied gegenüber der Fig. 26 besteht darin, daß keine Gasleiteinrichtung vorhanden ist. Daher erfolgt die Befestigung des Gassackes 12 unmittelbar am Generatorträger 8 über einen Haltering 55.

Bei dem Ausführungsbeispiel der Fig. 27 wird ein unterhalb des oberen/mittleren Bereichs 16, 17 der Abdeckung geschlossenes Gehäuse zur Verfügung gestellt, welches den Gassack 12 teilweise umschließt.

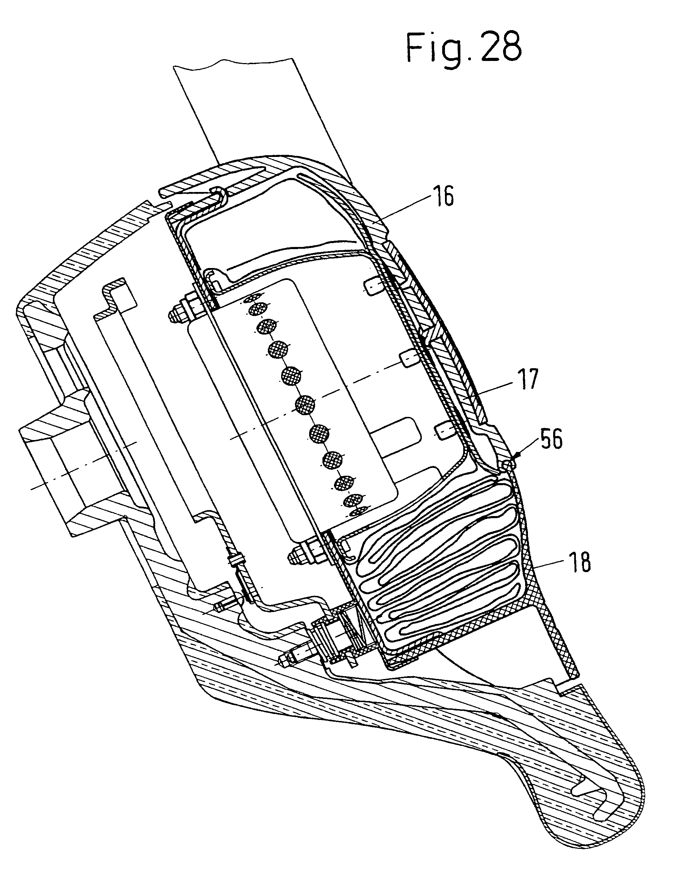

In Fig. 28 ist eine Ausführungsform dargestellt, bei der der obere und mittlere Bereich 16, 17 zum einen und der untere Bereich 18 zum anderen aus unterschiedlichen Materialien bestehen. Beispielsweise besteht der feststehende obere/mittlere Bereich 16, 17 aus Metall, während für den zu öffnenden Bereich 18 der Abdeckung ein Kunststoffmaterial vorgesehen sind. Die beiden Bereiche bzw. Materialien der Abdeckung sind formschlüssig miteinander verbunden. Hierzu ist beispielsweise gemäß Fig. 28 am unteren Rand des mittleren Bereichs 17 eine Nut oder Aussparung 56 vorgesehen, in die formschlüssig ein oberer Rand des unteren Bereichs 18 eingreift. Durch Verwendung unterschiedlicher Materialien kann in Ergänzung zu den bereits beschriebenen Mitteln erreicht werden, daß sich bei einer Entfaltung des Gassackes nur der unten liegende Bereich 18 der Abdeckung öffnet.

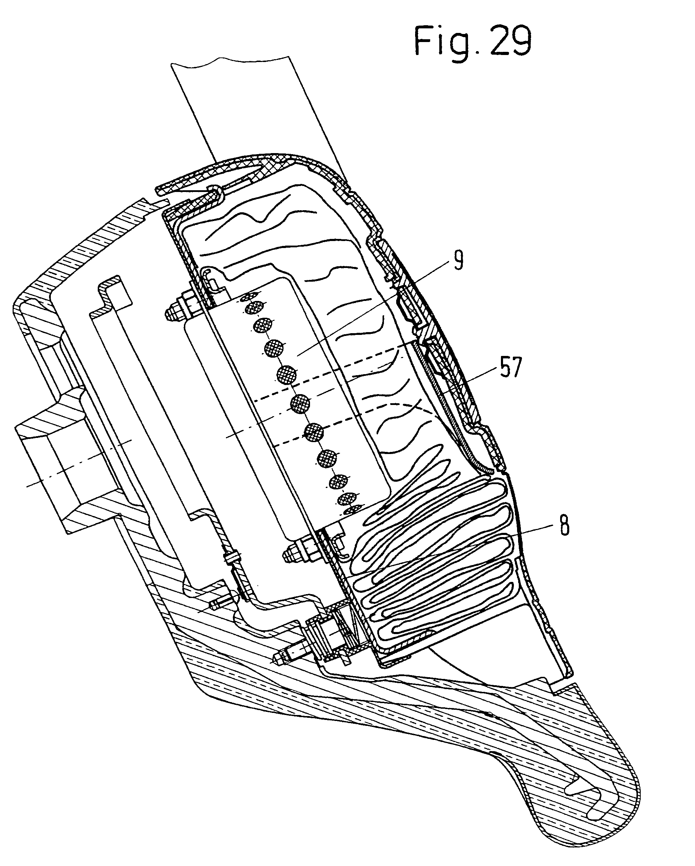

In Fig. 29 schließlich ist ein bügelartiges Element 57 vorgesehen, das sich aus Sicht des Fahrers in Querrichtung erstreckt und in den Randbereich des Gassackpakets mit dem Generatorträger 8 verbunden ist (gestrichelt angedeutet). Der Gassack 12 wird damit im wesentlichen in seiner gesamten Breite durch den Bügel 57 umschlossen und daher während einer Entfaltung des Gassackes ständig über der Gasleiteinrichtung bzw. dem Gasgenerator 9 fixiert. Damit ist eine Öffnung der Abdeckung nur in ihrem unten liegenden Bereich möglich.

## Patentansprüche

1. Airbagmodul für Lenkräder, wobei das Airbagmodul (1) zum Insassen hin mit einer Abdeckung (15) versehen ist,
**dadurch gekennzeichnet,**
**daß** die Abdeckung (15) lediglich in einem bei Geradeausstellung des Lenkrades unten liegenden Bereich vollständig zu öffnen ist, der überwiegend unterhalb einer Linie (18a) liegt, die quer zur Fahrtrichtung verläuft und die Lenksäulenmittelachse (33a) schneidet.

2. Airbagmodul nach Anspruch 1, **dadurch gekennzeichnet, daß** sich an den unteren zu öffnenden Bereich (18) ein mittlerer Bereich (17) und ein oberer Bereich (16) der Abdeckung (15) anschließen.

3. Airbagmodul nach Anspruch 2, **dadurch gekennzeichnet, daß** der an den unteren zu öffnenden Bereich (18) anschließende mittlere Bereich (17) und der obere Bereich (16) der Abdeckung (15) das Aufreißen dieser Bereiche verhindernde Versteifungselemente (38) aufweisen.

4. Airbagmodul nach Anspruch 2 oder 3, **dadurch gekennzeichnet, daß** der mittlere und obere Bereich (17, 16) der Abdeckung (15) fest mit einer darunter befindlichen Gasleiteinrichtung (10) oder einem dort angeordneten Gasgenerator (9) verbunden sind.

5. Airbagmodul nach mindestens einem der Ansprüche 2 bis 4, **dadurch gekennzeichnet, daß** mindestens der mittlere und obere Bereich (17, 16) der Abdeckung (15) zusammen mit dem Lenkrad aus einem Stück bestehen.

6. Airbagmodul nach Anspruch 2 oder 3, **dadurch gekennzeichnet, daß** der mittlere und obere Bereich (17, 16) der Abdeckung (15) über Deformationselemente (44) mit einem unter der Abdeckung (15) liegenden festen Bauteil (43) des Airbagmoduls verbunden sind, daß diese Bereiche der Abdeckung (15) um einen vorbestimmten geringen Betrag zu öffnen sind, wobei die Deformationselemente (44) so ausgebildet sind, daß sie Begrenzungen für das vorbestimmte geringe Öffnen und in dieser geöffneten Stellung Energieabsorptionselemente für den Fall eines Sekundäraufpralls eines Insassen auf die Abdeckung (15) darstellen.

7. Airbagmodul nach Anspruch 6, **dadurch gekennzeichnet, daß** die durch das Schwenken des mittleren und oberen Bereiches (17, 16) erzeugte maximale Öffnung dem unteren Bereich (18) der Abdeckung (15) zugewandt ist.

8. Airbagmodul nach mindestens einem der Ansprüche 2 bis 7, **dadurch gekennzeichnet, daß** der mittlere und obere Bereich (17, 16) der Abdeckung (15) so ausgebildet sind daß sie eine darunter liegende Gasleiteinrichtung (10) und/oder einen darunterliegenden Gasgenerator (47) zumindest annähernd vollständig abdecken.

9. Airbagmodul nach mindestens einem der Ansprüche 2 bis 8, **dadurch gekennzeichnet, daß** der mittlere und obere Bereich (17, 16) der Abdeckung (15) energieabsorbierend ausgeführt sind.

10. Airbagmodul nach mindestens einem der vorangehenden Ansprüche, **dadurch gekennzeichnet, daß** der Raum zwischen der Abdeckung (15) und einer Gasleiteinrichtung (10) bzw. einem Gasgenerator (47) des Airbagmoduls mit Schaum ausgefüllt ist.

11. Airbagmodul nach mindestens einem der vorhergehenden Ansprüche, **dadurch gekennzeichnet, daß** der Raum zwischen der Abdeckung (15) und einer Gasleiteinrichtung (10) bzw. einem Gasgenerator (47) des Airbagmoduls durch mindestens ein Deformationselement (42, 50) überbrückt ist.

12. Airbagmodul nach Anspruch 11, **dadurch gekennzeichnet, daß** das Deformationselement (50) rippenförmig ist und am oberen oder mittleren Bereich (16, 17) der Abdeckung (15) angespritzt ist.

13. Airbagmodul nach mindestens einem der vorhergehenden Ansprüche, **dadurch gekennzeichnet, daß** in dem bei Geradeausstellung des Lenkrades oben liegenden Bereich des Airbagmoduls ein Platzhalter (32, 49) vorgesehen ist.

14. Airbagmodul nach Anspruch 13, **dadurch gekennzeichnet, daß** der Platzhalter (32, 49) als Deformationselement ausgebildet ist.

15. Airbagmodul nach mindestens einem der vorhergehdnen Ansprüche, **dadurch gekennzeichnet, daß** eine Gasleiteinrichtung (10) angeordnet ist, die vorwiegend Öffnungen (11) in Richtung des sich vollständig öffnenden unteren Bereichs (18) der Abdeckung (15) aufweist.

16. Airbagmodul nach mindestens einem der vorhergehenden Ansprüche, **dadurch gekennzeichnet,** das die Gasleiteinrichtung (10) als Deformationselement ausgebildet ist.

17. Airbagmodul nach mindestens einem der vorhergehenden Ansprüche, **dadurch gekennzeichnet, daß** die Gasleiteinrichtung (53) integraler Bestandteil des Gasgenerators oder des Lenkradskelettes (52) ist.

18. Airbagmodul nach mindestens einem der vorhergehenden Ansprüche, **dadurch gekennzeichnet, daß** das gefaltete Gassackpaket (27, 28) neben der Gasleiteinrichtung (10) bzw. dem Gasgenerator (47) liegt und diese dabei vollständig umgibt.

19. Airbagmodul nach mindestens einem der vorhergehenden Ansprüche, **dadurch gekennzeichnet, daß** ein Gassack (12) des Airbagmoduls so gefaltet ist, daß über der Gasleiteinrichtung (10) bzw. über dem Gasgenerator (47) nur eine Gassacklage (13) liegt.

20. Airbagmodul nach mindestens einem der vorhergehenden Ansprüche 1 bis 17 und 19, **dadurch gekennzeichnet, daß** das gefaltete Gassackpaket (37, 38) neben der Gasleiteinrichtung (10) bzw. dem Gasgenerator (47) liegt, und diese dabei U-förmig umgibt.

21. Airgabmodul nach Anspruch 20, **dadurch gekennzeichnet, daß** der bei Geradeausfahrt oben liegende Bereich des Airbagmoduls frei von Gassackgewebe gehalten ist.

22. Airbagmodul nach Anspruch 20, **dadurch gekennzeichnet, daß** die beiden Schenkel des U-förmigen Gassackpaketes sich im bei Geradeausfahrt oben liegenden Bereich des Airbagmoduls berühren.

23. Airbagmodul nach mindestens einem der vorhergehenden Ansprüche, **dadurch gekennzeichnet, daß** Mittel (71) für die zumindestens zeitweise Fixierung des Gassacks während der Entfaltung über der Gasleiteinrichtung/ dem Gasgenerator vorgesehen sind.

24. Airgabmodul nach mindestens einem der vorhergehenden Ansprüche, **dadurch gekennzeichnet, daß** der Gassack im Bereich der in Richtung des unteren Bereichs (74) der Abdeckung orientierten Gasaustrittsöffnung (75) der Gasleiteinrichtung (73) angebunden ist.

25. Airbagmodul nach mindestens einem der vorhergehenden Ansprüche, **dadurch gekennzeichnet, daß** ein Einblasmund des Gassacks (12) des Airbagmoduls bezüglich der Außenkontur des Gassacks (12) mittig oder in der bei Geradeausstellung des Lenkrades vorgesehenen Einbaulage nach unten versetzt angeordnet ist.

26. Airbagmodul nach mindestens einem der vorhergehenden Ansprüche, **dadurch gekennzeichnet, daß** im mittleren und oberen Bereich (17, 16) der Abdeckung (15) Betätigungselemente angeordnet sind.

27. Airbagmodul nach mindestens einem der vorhergehenden Ansprüche, **dadurch gekennzeichnet, daß** die Abdeckung des Gassackes eine Seitenwand (51) aufweist, die im Bereich (53) von Aufreißlinien (21, 22, 23a, 23b) des unten liegenden Bereichs (18) der Abdeckung unterbrochen ist.

28. Airbagmodul nach Anspruch 27, **dadurch gekennzeichnet, daß** der unten liegende Bereich (18) der Abdeckung Abdeckungssegmente (19, 20) aufweist, die bei einem Entfalten des Gassackes (12) in Freiräume (50) zwischen den Speichen des Lenkrades scharnieren,

29. Airbagmodul nach Anspruch 28, **dadurch gekennzeichnet, daß** die Seitenwand (51) im Bereich der Abdeckungssegmente (19, 20) mit einem Trägerelement (8) für den Gasgenerator verbunden ist.

30. Airbagmodul nach Anspruch 28, **dadurch gekennzeichnet, daß** die Seitenwand (51) in der Nähe des Bodens des Trägerelements (8) für den Gasgenerator mit diesem verbunden ist.

31. Airbagmodul nach mindestens einem der vorhergehenden Ansprüche, **dadurch gekennzeichnet, daß** zwischen dem oberen/mittleren Bereich (16, 17) der Abdeckung und dem Gassackpaket des Airbagmoduls ein Deckblech (54) angeordnet ist.

32. Airbagmodul nach Anspruch 31, **dadurch gekennzeichnet, daß** das Deckblech (54) fest mit einer Gasleiteinrichtung (10) oder dem Gasgenerator (9) verbunden ist.

33. Airbagmodul nach Anspruch 31 oder 32, **dadurch gekennzeichnet, daß** das Deckblech (54) Seitenwände (54a) aufweist, die fest mit einem Trägerelement (8) für den Gasgenerator verbunden sind.

34. Airbagmodul nach Anspruch 33, **dadurch gekennzeichnet, daß** das Deckblech (54) und das Trägerelement (8) für den Gasgenerator einteilig ausgeführt sind.

35. Airbagmodul nach mindestens einem der vorhergehenden Ansprüche, **dadurch gekennzeichnet, daß** der obere und mittlere Bereich (16, 17) und der untere Bereich (18) der Abdeckung aus unterschiedlichen Materialien bestehen.

36. Airbagmodul nach Anspruch 35, **dadurch gekennzeichnet, daß** der obere/mittlere Bereich (16, 17) der Abdeckung aus einem Metall und der untere Bereich (18) der Abdeckung aus einem Kunststoff bestehen.

37. Airbagmodul nach Anspruch 35 oder 36, **dadurch gekennzeichnet, daß** der obere und mittlere Bereich (16, 17) der Abdeckung und der untere Bereich (18) der Abdeckung formschlüssig miteinander verbunden sind.

38. Airbagmodul nach mindestens einem der vorhergehenden Ansprüche, **gekennzeichnet durch** Mittel (57) zur ständigen Fixierung des Gassack während seiner Entfaltung über einer Gasleiteinrichtung (10) oder dem Gasgenerator (9).

39. Airbagmodul nach Anspruch 38, **dadurch gekennzeichnet, daß** die Fixiermittel (57) eine Fixierung des Gassacks zumindest unterhalb des mittleren Bereiches (17) der Abdeckung vornehmen.

40. Airbagmodul nach Anspruch 39, **dadurch gekennzeichnet, daß** die Fixiermittel (57) mindestens mit dem mittleren Bereich der Abdeckung fest verbunden sind.

41. Airbagmodul nach mindestens einem der Ansprüche 38 bis 40, **dadurch gekennzeichnet, daß** die Fixiermittel ein im wesentlichen quer verlaufendes bügelartiges Element (57) aufweisen, das fest mit einem Trägerelement (8) für den Gasgenerator verbunden ist.

## Claims

1. Airbag module for steering wheels, the airbag module (1) being provided with a cover (15) facing the occupant, **characterized in that** the cover (15) is to be fully opened only in its region which is located at the bottom in the straight-ahead position of the steering wheel, which lies predominantly below a line (18a) which runs transversely with respect to the direction of travel and intersects the central axis (33a) of the steering column.

2. Airbag module according to Claim 1, **characterized in that** a central region (17) and an upper region (16) of the cover (15) adjoin the lower region (18) to be opened.

3. Airbag module according to Claim 2, **characterized in that** the central region (17), which adjoins the lower region (18) to be opened, and the upper region (16) of the cover (15) have reinforcing elements (38) preventing these regions from tearing open.

4. Airbag module according to Claim 2 or 3,
**characterized in that** the central and upper regions (17, 16) of the cover (15) are fixedly connected to a gas-conducting device (10) located below the said cover or to a gas generator (9) arranged there.

5. Airbag module according to at least one of Claims 2 to 4, **characterized in that** at least the central and upper regions (17, 16) of the cover (15) consist, together with the steering wheel, of one component.

6. Airbag module according to Claims 2 or 3, **characterized in that** the central and upper regions (17, 16) of the cover (15) are connected via deformation elements (44) to a fixed component (43) of the airbag module, which component is located below the cover (15), **in that** these regions of the cover (15) are to be opened by a predetermined, small amount, the deformation elements (44) being designed in such a manner that they constitute boundaries for the predetermined, small opening and, in this opened position, constitute energy-absorption elements for the event of a secondary impact of an occupant on the cover (15).

7. Airbag module according to Claim 6, **characterized in that** the maximum opening produced by the pivoting of the central and upper regions (17, 16) faces the lower region (18) of the cover (15).

8. Airbag module according to at least one of Claims 2 to 7, **characterized in that** the central and upper regions (17, 16) of the cover (15) are designed in such a manner that they at least approximately fully cover a gas-conducting device (10) located below the said cover and/or a gas generator (47) located below it.

9. Airbag module according to at least one of Claims 2 to 8, **characterized in that** the central and upper regions (17, 16) of the cover (15) are designed such that they absorb energy.

10. Airbag module according to at least one of the preceding claims, **characterized in that** the space between the cover (15) and a gas-conducting device (10) or a gas generator (47) of the airbag module is filled with foam.

11. Airbag module according to at least one of the preceding claims, **characterized in that** the space between the cover (15) and a gas-conducting device (10) or a gas generator (47) of the airbag module is bridged by at least one deformation element (42, 50).

12. Airbag module according to Claim 11, **characterized in that** the deformation element (50) is in the form of ribs and is injection-moulded onto the upper or central region (16, 17) of the cover (15).

13. Airbag module according to at least one of the preceding claims, **characterized in that** a spacer (32,49) is provided **in that** region of the airbag module which is located at the top in the straight-ahead position of the steering wheel.

14. Airbag module according to Claim 13, **characterized in that** the spacer (32, 49) is designed as a deformation element.

15. Airbag module according to at least one of the preceding claims, **characterized in that** there is arranged a gas-conducting device (10) which predominantly has openings (11) facing the fully opening, lower region (18) of the cover (15).

16. Airbag module according to at least one of the preceding claims, **characterized in that** the gas-conducting device (10) is designed as a deformation element.

17. Airbag module according to at least one of the preceding claims, **characterized in that** the gas-conducting device (53) is an integral part of the gas generator or of the steering wheel frame (52).

18. Airbag module according to at least one of the preceding claims, **characterized in that** the folded gas bag package (27, 28) lies next to the gas-conducting device (10) or the gas generator (47) and fully surrounds them.

19. Airbag module according to at least one of the preceding claims, **characterized in that** a gas bag (12) of the airbag module is folded in such a manner that just one gas-bag layer (13) lies above the gas-conducting device (10) or above the gas generator (47).

20. Airbag module according to at least one of the preceding Claims 1 to 17 and 19, **characterized in that** the folded gas bag package (37, 38) lies next to the gas-conducting device (10) or the gas generator (47) and surrounds them in a U-shaped manner.

21. Airbag module according to Claim 20, **characterized in that** that region of the airbag module which is located at the top during straight-ahead travel is kept free of gas bag fabric.

22. Airbag module according to Claim 20, **characterized in that** the two limbs of the U-shaped gas bag package are in contact **in that** region of the airbag module which is located at the top during straight-ahead travel.

23. Airbag module according to at least one of the preceding claims, **characterized in that** means (71) are provided for the at least temporary fixing of the gas bag in place during the deployment above the gas-conducting device/the gas generator.

24. Airbag module according to at least one of the preceding claims, **characterized in that** the gas bag is tied down in the region of that gas outlet opening (75) of the gas-conducting device (73) which is oriented in the direction of the lower region (74) of the cover.

25. Airbag module according to at least one of the preceding claims, **characterized in that** a blow-in mouth of the gas bag (12) of the airbag module is arranged centrally with regard to the outer contour of the gas bag (12) or is arranged offset downwards in the installation position provided in the straight-ahead position of the steering wheel.

26. Airbag module according to at least one of the preceding claims, **characterized in that** actuating elements are arranged in the central and upper regions (17, 16) of the cover (15).

27. Airbag module according to at least one of the preceding claims, **characterized in that** the cover of the gas bag has a side wall (51) which is interrupted in the region (53) by tear-open lines (21, 22, 23a, 23b) of that region (18) of the cover which is located at the bottom.

28. Airbag module according to Claim 27, **characterized in that** that region (18) of the cover which is located at the bottom has cover segments (19, 20) which swivel into clearances (50) between the spokes of the steering wheel when the gas bag (12) is deployed.

29. Airbag module according to Claim 28, **characterized in that** the side wall (51) is connected in the region of the cover segments (19, 20) to a support element (8) for the gas generator.

30. Airbag module according to Claim 28, **characterized in that** the side wall (51) is connected to the support element (8) for the gas generator in the vicinity of the base of the said support element.

31. Airbag module according to at least one of the preceding claims, **characterized in that** a cover plate (54) is arranged between the upper/central region (16, 17) of the cover and the gas bag package of the airbag module.

32. Airbag module according to Claim 31, **characterized in that** the cover plate (54) is fixedly connected to a gas-conducting device (10) or to the gas generator (9).

33. Airbag module according to Claim 31 or 32, **characterized in that** the cover plate (54) has side walls (54a) which are fixedly connected to a support element (8) for the gas generator.

34. Airbag module according to Claim 33, **characterized in that** the cover plate (54) and the support element (8) of the gas generator are designed as a single part.

35. Airbag module according to at least one of the preceding claims, **characterized in that** the upper and central regions (16, 17) and the lower region (18) of the cover consist of different materials.

36. Airbag module according to Claim 35, **characterized in that** the upper/central region (16, 17) of the cover consists of a metal and the lower region (18) of the cover consists of a plastic.

37. Airbag module according to Claim 35 or 36, **characterized in that** the upper and central regions (16, 17) of the cover and the lower region (18) of the cover are connected to one another in a form-fitting manner.

38. Airbag module according to at least one of the preceding claims, **characterized by** means (57) for continuously fixing the gas bag in place during its deployment above a gas-conducting device (10) or the gas generator (9).

39. Airbag module according to Claim 38, **characterized in that** the fixing means (57) fix the gas bag in place at least below the central region (17) of the cover.

40. Airbag module according to Claim 39, **characterized in that** the fixing means (57) are fixedly connected at least to the central region of the cover.

41. Airbag module according to at least one of Claims 38 to 40, **characterized in that** the fixing means have an essentially transversely extending, clip-like element (57) which is fixedly connected to a support element (8) for the gas generator.

## Revendications

1. Module d'airbag pour volants de direction, ledit module d'airbag étant pourvu d'un recouvrement (15) en direction de l'occupant,
**caractérisé en ce que**
le recouvrement (15) peut être entièrement ouvert uniquement dans une zone située vers le bas lors d'une mise en position du volant en ligne droite, ladite zone étant en majeure partie située au-dessous d'une ligne (18a) qui s'étend transversalement à la direction de circulation et qui recoupe l'axe médian de la colonne de direction (33a).

2. Module d'airbag selon la revendication 1, **caractérisé en ce qu'**une zone médiane (17) et une zone supérieure (16) du recouvrement (15) se raccordent à la zone inférieure à ouvrir (18).

3. Module d'airbag selon la revendication 2, **caractérisé en ce que** la zone médiane (17) et la zone supérieure (16) du recouvrement (15) qui se raccordent à la zone inférieure à ouvrir (18) comportent des éléments de rigidification (38) qui empêchent l'arrachement de ces zones.

4. Module d'airbag selon l'une ou l'autre des revendications 2 et 3, **caractérisé en ce que** la zone médiane (17) et la zone supérieure (16) du recouvrement (15) sont reliées fermement à un dispositif de guidage de gaz (10) situé au-dessous, ou à un générateur de gaz (9) agencé à cet emplacement.

5. Module d'airbag selon l'une au moins des revendications 2 à 4, **caractérisé en ce que** la zone médiane et la zone supérieure (17, 16) au moins du recouvrement (15) sont formées d'une seule pièce conjointement avec le volant de direction.

6. Module d'airbag selon l'une ou l'autre des revendications 2 et 3, **caractérisé en ce que** la zone médiane et la zone supérieure (17, 16) du recouvrement (15) sont reliées via des éléments à déformation (44) à un composant rigide (43) du module d'airbag qui se trouve au-dessous du recouvrement (15), **en ce que** ces zones du recouvrement (15) peuvent être ouvertes dans une faible mesure prédéterminée, lesdits éléments à déformation (44) étant ainsi réalisés qu'ils représentent des limitations pour la faible ouverture prédéterminée et constituent dans cette position ouverte des éléments d'absorption d'énergie pour le cas d'un impact secondaire d'un occupant sur le recouvrement (15).

7. Module d'airbag selon la revendication 6, **caractérisé en ce que** l'ouverture maximale produite par pivotement de la zone médiane et de la zone supérieure (17, 16) est tournée vers la zone inférieure (18) du recouvrement (15).

8. Module d'airbag selon l'une au moins des revendications 2 à 7, **caractérisé en ce que** la zone médiane et la zone supérieure (17, 16) du recouvrement (15) sont ainsi réalisées qu'elles recouvrent au moins approximativement entièrement un dispositif de guidage de gaz (10) situé au-dessous et/ou un générateur de gaz (47) disposé au-dessous.

9. Module d'airbag selon l'une au moins des revendications 2 à 8, **caractérisé en ce que** la zone médiane et la zone supérieure (17, 16) du recouvrement (15) sont réalisées de manière à absorber l'énergie.

10. Module d'airbag selon l'une au moins des revendications précédentes, **caractérisé en ce que** l'espace entre le recouvrement (15) et un dispositif de guidage de gaz (10) ou respectivement un générateur de gaz (47) du module d'airbag est rempli de mousse.

11. Module d'airbag selon l'une au moins des revendications précédentes, **caractérisé en ce que** l'espace entre le recouvrement (15) et un dispositif de guidage de gaz (10) ou respectivement un générateur de gaz (47) du module d'airbag est comblé par au moins un élément à déformation (42, 50).

12. Module d'airbag selon la revendication 11, **caractérisé en ce que** l'élément à déformation (50) est en forme de nervure et appliqué par injection sur la zone supérieure et sur la zone médiane (16, 17) du recouvrement (15).

13. Module d'airbag selon l'une au moins des revendications précédentes, **caractérisé en ce qu'**un élément de réservation de place (32, 49) est prévu dans la zone du module d'airbag qui est disposée en haut lors de la mise en position du volant de direction en ligne droite.

14. Module d'airbag selon la revendication 13, **caractérisé en ce que** l'élément de réservation de place (32, 49) est réalisé sous forme d'élément à déformation.

15. Module d'airbag selon l'une au moins des revendications précédentes, **caractérisé en ce qu'**il est agencé un dispositif de guidage de gaz (10) qui présente principalement des ouvertures (11) en direction de la zone inférieure (18) du recouvrement (15) qui s'ouvre totalement.

16. Module d'airbag selon l'une au moins des revendications précédentes, **caractérisé en ce que** le dispositif de guidage de gaz (10) est réalisé sous forme d'élément à déformation.

17. Module d'airbag selon l'une au moins des revendications précédentes, **caractérisé en ce que** le dispositif de guidage de gaz (53) est un composant intégral du générateur de gaz ou de l'ossature du volant de direction (52).

18. Module d'airbag selon l'une au moins des revendications précédentes, **caractérisé en ce que** le paquet replié (27, 28) du sac à gaz est disposé à côté du dispositif de guidage de gaz (10) ou du générateur de gaz (47) et entoure complètement celui-ci.

19. Module d'airbag selon l'une au moins des revendications précédentes, **caractérisé en ce qu'**un sac à gaz (12) du module d'airbag est ainsi replié qu'une seule couche du sac à gaz (13) est disposée au-dessus du dispositif de guidage de gaz (10) ou au-dessus du générateur de gaz (47).

20. Module d'airbag selon l'une au moins des revendications 1 à 17 et 19, **caractérisé en ce que** le paquet replié (37, 38) du sac à gaz est disposé à côté du dispositif de guidage de gaz (10) ou du générateur de gaz (47) et entoure ainsi celui-ci en formant un U.

21. Module d'airbag selon la revendication 20, **caractérisé en ce que** la zone du module d'airbag située en haut lors de la circulation en ligne droite est dépourvue de tissu du sac à gaz.

22. Module d'airbag selon la revendication 20, **caractérisé en ce que** les deux branches du paquet en forme de U du sac à gaz se touchent dans la zone du module d'airbag située en haut lors de la circulation en ligne droite.

23. Module d'airbag selon l'une au moins des revendications précédentes, **caractérisé en ce qu'**il est prévu des moyens (71) pour la fixation au moins temporaire du sac à gaz pendant le dépliage au-dessus du dispositif de guidage de gaz et/ou du générateur de gaz.

24. Module d'airbag selon l'une au moins des revendications précédentes, **caractérisé en ce que** le sac à gaz est relié dans la région de l'ouverture de sortie de gaz (75) du dispositif de guidage de gaz (73) qui est orientée en direction de la zone inférieure (74) du recouvrement.

25. Module d'airbag selon l'une au moins des revendications précédentes, **caractérisé en ce qu'**une embouchure de gonflage du sac à gaz (12) du module d'airbag est agencée au milieu par rapport au contour extérieur du sac à gaz (12), ou déportée vers le bas dans la position de montage prévue lors de la position du volant de direction en ligne droite.

26. Module d'airbag selon l'une au moins des revendications précédentes, **caractérisé en ce que** des éléments d'actionnement sont agencés dans la zone médiane et dans la zone supérieure (17, 16) du recouvrement (15).

27. Module d'airbag selon l'une au moins des revendications précédentes, **caractérisé en ce que** le recouvrement du sac à gaz comporte une paroi latérale (51) qui est interrompue dans la région (53) de lignes d'arrachement (21, 22, 23a, 23d) de la zone inférieure (18) du recouvrement.

28. Module d'airbag selon la revendication 27, **caractérisé en ce que** la zone inférieure (18) du recouvrement comporte des segments de recouvrement (19, 20) qui se débattent à la manière de charnières dans des espaces libres (50) entre les rayons du volant de direction lors d'un dépliage du sac à gaz (12).

29. Module d'airbag selon la revendication 28, **caractérisé en ce que** la paroi latérale (51) est reliée à un élément porteur (5) pour le générateur de gaz dans la région des segments de recouvrement (19, 20).

30. Module d'airbag selon la revendication 28, **caractérisé en ce que** la paroi latérale (51) est reliée au fond de l'élément porteur (8) pour le générateur de gaz au voisinage dudit fond.

31. Module d'airbag selon l'une au moins des revendications précédentes, **caractérisé en ce qu'**une tôle de couverture (54) est agencée entre la zone supérieure/médiane (16, 17) du recouvrement et le paquet de sac à gaz du module d'airbag.

32. Module d'airbag selon la revendication 31, **caractérisé en ce que** la tôle de couverture (54) est fermement reliée à un dispositif de guidage de gaz (10) ou au générateur de gaz (9).

33. Module d'airbag selon l'une ou l'autre des revendications 31 et 32, **caractérisé en ce que** la tôle de couverture (54) comporte des parois latérales (54a) qui sont fermement reliées à un élément porteur (8) pour le générateur de gaz.

34. Module d'airbag selon la revendication 33, **caractérisé en ce que** la tôle de couverture (54) et l'élément porteur (8) pour le générateur de gaz sont réalisés d'une seule pièce.

35. Module d'airbag selon l'une au moins des revendications précédentes, **caractérisé en ce que** la zone supérieure et la zone médiane (16, 17) ainsi que la zone inférieure (18) du recouvrement sont réalisées en matériaux différents.

36. Module d'airbag selon la revendication 35, **caractérisé en ce que** la zone supérieure et la zone médiane (16,17) du recouvrement sont réalisées en métal et la zone inférieure (18) du recouvrement est réalisée en matière plastique.

37. Module d'airbag selon l'une ou l'autre des revendications 35 et 36, **caractérisé en ce que** la zone supérieure et la zone médiane (16, 17) du recouvrement et la zone inférieure (18) du recouvrement sont reliées les unes aux autres par coopération de formes.

38. Module d'airbag selon l'une au moins des revendications précédentes, **caractérisé par** des moyens (57) pour la fixation permanente du sac à gaz pendant son dépliage au-dessus d'un dispositif de guidage de gaz (10) ou du générateur de gaz (47).

39. Module d'airbag selon la revendication 38, **caractérisé en ce que** les moyens de fixation (57) assurent une fixation du sac à gaz au moins au-dessous de la zone médiane (17) du recouvrement.

40. Module d'airbag selon la revendication 39, **caractérisé en ce que** les moyens de fixation (57) sont fermement reliés au moins à la zone médiane du recouvrement.

41. Module d'airbag selon l'une au moins des revendications 38 à 40, **caractérisé en ce que** les moyens de fixation comprennent un élément (57) en forme d'arceau s'étendant essentiellement transversalement, qui est fermement relié à un élément porteur (8) pour le générateur de gaz.
